# EUROPÄISCHE PATENTSCHRIFT

(11) **EP 2 870 433 B1**
(45) Veröffentlichungstag und Bekanntmachung des Hinweises auf die Patenterteilung: **07.09.2016**
(21) Anmeldenummer: 13733014.8
(22) Anmeldetag: 04.07.2013
(51) Int. Cl.: G01D 5/26, G01D 9/30, G01B 5/008

(54) **OPTISCHER POSITIONSGEBER MIT ANALOGEM SPEICHER**
OPTICAL POSITIONER WITH ANALOGUE MEMORY
INDICATEUR DE POSITION OPTIQUE AVEC MÉMOIRE ANALOGIQUE

(30) Priorität: 04.07.2012 EP 12174944
(43) Veröffentlichungstag der Anmeldung: 13.05.2015
(73) Patentinhaber: Hexagon Technology Center GmbH, 9435 Heerbrugg (CH)
(72) Erfinder: FRITSCH, Robert, CH-9436 Balgach (CH)
(74) Vertreter: Gyaja, Christoph Benjamin
(86) Internationale Anmeldenummer: PCT/EP2013/064169
(87) Internationale Veröffentlichungsnummer: WO 2014/006147

(56) Entgegenhaltungen:
- EP-A1- 1 890 113
- WO-A1-95/32579
- WO-A2-2007/132453
- US-A- 5 848 188
- US-A1- 2003 058 355

## Beschreibung

Die Erfindung betrifft einen Positionsgeber mit einem Sensorelement mit analogem Speicher nach dem Oberbegriff des Anspruchs 1 und ein Verfahren nach dem Oberbegriff des Anspruchs 10.

Die Erfindung betrifft speziell das technische Gebiet von Positionsgebern, bei welchen zur Positionsbestimmung ein Positionscode von einem Sensorelement erfasst wird, wie diese in unterschiedlichsten Anwendungen zur Längen- und/oder Winkelbestimmung in einer oder in mehreren Dimensionen eingesetzt werden. Einige beispielhafte Ausführungsformen finden sich etwa in US 5,402,582, EP 1 474 650, US 7,051,450 oder US 7,069,664, wobei ein in der vorliegenden Erfindung beschriebenes Sensorelement auch in anders aufgebauten Ausführungsformen von Positionsgebern anwendbar ist, bei welchen im Rahmen der Positionsbestimmung eine optische Erfassung einer Positions- oder Lagecodierung (oder zumindest eines Teils einer solchen Codierung) durchgeführt wird.

Zur Erfassung des Positionscodes sind verschiedenste Ansätze bekannt, etwa Abbildung, Schattenwurf, Projektion, Reflexion, Interferenzmuster-Bildung, externe oder interne Beleuchtung des Codes, selbstleuchtende oder fluoreszierende Codemuster, etc. Es werden elektromagnetische Wellen zur, vorzugsweise berührungslosen, Übertragung eines Codemusters auf das Sensorelement verwendet, speziell elektromagnetische Strahlung im optischen Wellenlängenbereich. Der Code kann dabei inkrementell, absolut oder auch als Mischform bspw. absolut innerhalb nur eines Teils des Messbereichs oder inkrementell innerhalb von absolut codierten Bereichen ausgebildet sein. Beispiele hierfür sind etwa in WO 2008/019855, WO 2010/139964, DE 11 2006 003 663 oder WO 2004/094957 zu finden.

Allgemein erfolgt hierbei ein Erfassen von zumindest einem Teil eines Positionscodes mit einem Sensorelement, welches mehrere aktive Erfassungsbereiche aufweist. Diese Erfassungsbereiche erfassen jeweils für sich Unterbereiche dieses Codeteils. Die Erfassungsbereiche können als diskrete, getrennte Teilbereiche ausgeführt sein, welche an dedizierten Stellen, beispielsweise in einer Reihe oder in einer zweidimensionalen Matrix angeordnet sind. Die Erfassungsbereiche (Pixel) sind dabei in einer fortlaufenden, im wesentlichen ununterbrochenen Anordnung aneinandergereiht, also als eine kontinuierliche oder quasi-kontinuierliche Anordnung von photosensitiven Bereichen. Eine quasi-kontinuierliche Anordnung von photosensitiven Bereichen ist dabei eine Aneinanderreihung mit - im Verhältnis zu ihrer jeweils aktiven Sensorfläche - nur geringen Abständen dazwischen, beispielsweise wie dies bei bekannten CCD-Zeilen- oder CCD-Flächen-Sensoren gebräuchlich ist.

Die Anordnung der photosensitiven Bereiche kann jedoch auch kontinuierlich, also ohne Beabstandung der Pixel ausgeführt sein, wobei ein Photon, welches in einem Zwischenbereich von zwei Pixeln auftrifft, mit einer gewissen Wahrscheinlichkeit dem einen oder anderen Pixel zugeordnet wird. Die geometrische Anordnung der Erfassungsbereiche kann auch speziell an den zu erfassenden Code angepasst sein oder entsprechend maskiert sein, beispielsweise durch entsprechend des zu erfassenden Codemusters angeordnete Sensoren oder durch ein Maskieren der Erfassungsbereiche, sodass deren Sensitivität auf einen gewünschten Flächenbereich eingeschränkt ist. Die geometrische Anordnung von Erfassungselementen kann neben der gebräuchlichsten, linearen Anordnung also durchaus auch gekrümmt sein. Beispielsweise kann eine Reihe oder Matrix von Erfassungselementen nicht nur als Linie oder Rechteck, sondern auch in Form eines Kreisbogens, gewinkelt oder in einer beliebigen Kurvenform, bzw. auch entlang einer sphärischen Fläche, etc. angeordnet sein.

Bei Positionsmessungen, speziell bei hochgenauen Positionsmessungen, wird zumindest ein Teilbereich des Codes vom Sensorelement zu einem vorgegebenen Zeitpunkt erfasst. Speziell durch eine Auswertung mit Sub-Pixel Auflösung des erfassten Codeabschnitts sind sehr hohe Positionsgenauigkeiten realisierbar. Dabei kann neben der erzielbaren Positionsauflösung beim Erfassen des Codes auch die exakte Festlegung des Erfassungszeitpunktes erheblichen Einfluss auf die erzielbare Genauigkeit des damit betriebenen Messsystems haben, speziell wenn mehrere geometrische Dimensionen durch mehrere Positionssensoren erfasst werden und diese im Anschluss miteinander verknüpft werden, beispielsweise zur Bestimmung einer mehrdimensionalen Lage eines Objekts. Auch bei Messungen während einer Bewegung des zu vermessenden Objekts, also bei sich zeitlich ändernder Position, ist der exakte Zeitpunkt der Positionserfassung von Bedeutung. Speziell bei hohen Positionsauflösungen, beispielsweise im Bereich von einigen Mikrometern bzw. Bogensekunden oder gar darunter, sind schon kleinste Bewegungen - wie diese beispielsweise aufgrund von Vibrationen, Schwingungen, Zittern des Benutzers, etc. auftreten - vom Positionsgeber erfassbar.

Deshalb wird die Auslösung der Messwerterfassung vielfach mittels eines Auslösesignals oder Triggersignals durchgeführt, welches den gewünschten Zeitpunkt der Erfassung des Positionswerts definiert. Beispielsweise kann eine Flanke eines elektrischen Signals zur Auslösung der Messwerterfassung herangezogen werden. Dabei kann eine ereignisbasierte Triggerung, bei welcher die Auslösung der Messung durch ein externes Ereignis hervorgerufen wird, angewandt werden. Auch eine Triggerung durch ein internes oder externes Taktsignal, welches gegebenenfalls über mehrere Sensoren hinweg synchronisiert ist, kann angewandt werden. Beispielsweise kann dabei ein synchrones Bestimmen von Positionswerten von mehreren - auch räumlich verteilten - Positionsgebern durchgeführt werden und deren Messdaten können im Anschluss miteinander verknüpft werden, um daraus eine mehrdimensionale Raumlage zu bestimmen. Auch ein zyklisches, mit geringem zeitlichen Jitter behaftetes Auslesen von Istwertsignalen von Positionsgebern kann gefordert sein, beispielsweise für Istwertsignale in einer zeitdiskreten Regelung einer Positioniereinheit. Ein weiteres Beispiel einer speziellen Ausführungsform wird etwa in EP 2 533 022 beschrieben.

Ein Anwendungsbeispiel, in welchem eine hohe Präzision der Positionsbestimmung gefordert ist, sind Vermessungsgeräte (etwa geodätische Instrumente oder Koordinatenmessmaschinen). Auch an Produktionsmaschinen (etwa Pick&Place-, Laserschneid-, Schleif-, Dreh-, Fräsmaschinen, etc.) werden immer höhere Anforderungen an die Positionsmessgenauigkeit gestellt. Die bestimmte Position kann dabei insbesondere durch lineare Lagen, Drehlagen oder Kombinationen von diesen gebildet werden. Auch bei Überwachungs- und Diagnosesystemen kann eine hochsynchrone Messwerterfassung erforderlich sein, beispielsweise in jenem aus der Patentanmeldung PCT/EP2012/054095.

Im Stand der Technik wird bei Positionssensoren zum Zeitpunkt des Auftretens des Triggersignals ein Beleuchtungszustand des Sensorelements erfasst, welcher dann - zumeist seriell über nur einen einzigen Kanal - Pixel für Pixel ausgetaktet wird. Erst wenn die Austaktung aller Pixel abgeschlossen ist, kann erneut eine weitere Auslösung durch ein Triggersignal und eine Erfassung des aktuellen Codebereichs durch das Sensorelement erfolgen. Eine erneute Messung ist somit erst wieder möglich, wenn der vorherige Messwert komplett ausgelesen ist.

Da ein solches sequentielles Auslesen eines CCD-Chips eine nicht vernachlässigbare Zeit in Anspruch nimmt, sind die erzielbaren Ausleseraten meist verhältnismässig gering und folglich ist auch eine Untergrenze des Zeitabstands zwischen zwei aufeinander folgenden Erfassungen gegeben. Speziell, falls zusätzlich zum pixelweisen Austakten des CCDs noch eine gegebenenfalls ebenso zeitaufwändige A/D-Wandlung jedes Pixelwerts erfolgt. Durch Anwendung einer so genannten "pipelined" A/D-Wandlung kann dabei zumindest die Konversionszeit der Digitalisierung verringert bzw. bis auf eine verbleibende Latenzzeit sogar gänzlich vermieden werden. Die Austaktung limitiert die maximal erzielbare Messrate eines derartigen Sensors und beeinflusst folglich auch die minimal zulässige Zeitdauer zwischen zwei Trigger-Events, bei welcher eine komplette Erfassung von zwei Werten des Beleuchtungszustand und somit der Lagecodewerte möglich ist. Hierbei kann zwar durch zeitliche Interpolation oder Extrapolation zwischen zwei oder mehreren Messungen eine Annährung des Messwertes an die zum Triggerzeitpunkt tatsächlich vorliegende Position erzielt werden, eine tatsächliche Erfassung eines Messwertes zu den Triggerzeitpunkten ist jedoch nicht möglich.

Eine z.B. aus US 4,330,796 oder US 2012/081590 bei CCDs bekannte Lösung zur Erhöhung der Ausleserate ist ein so genanntes Framing, bei welchem nicht immer die ganze CCD-Struktur sondern nur ein momentan relevanter Teilbereich dieser ausgelesen wird, auch als ROI (Abk. für "Region Of Interest") bezeichnet, was in entsprechend kürzerer Zeit möglich ist. Eine reduzierte Auslesezeit kann - auf Kosten der Positionsauflösung - auch durch ein Binning erzielt werden, wobei diese Technologie meist primär zur Erhöhung der Lichtempfindlichkeit angewendet wird, was bei Positionsgebern meist von untergeordneter Bedeutung ist, da im Positionsgeber bei künstlicher Beleuchtung und in einem gegenüber äußeren Lichteinflüssen geschlossenen Gehäuse meist wohldefinierte bzw. auch einstellbare Beleuchtungsverhältnisse vorherrschen. Bei solchen gekapselten Positionsgebern kann beispielsweise auch ein Belichtungssteuerung durch entsprechende Ansteuerung der Lichtquelle, speziell durch Anpassung der Intensität und/oder Leuchtdauer der Lichtemission, erziel werden. Beispielsweise kann durch eine kurzzeitige Beleuchtung (z.B. in Form eines Lichtblitzes im Nanosekundenbereich oder darunter) ein örtliches Verschmieren einer Code-Abbildung auf einem Sensorelement vermieden bzw. reduziert werden, was speziell bei dynamischen Bewegungen bedeutsam sein kann.

Die im Stand der Technik angewandten Zeilen- oder Flächen-sensoren haben entweder eine analoge oder eine digitale Schnittstelle. Analoge optische Sensorelemente nach dem CCD-Prinzip haben beispielsweise Zeilen von photosensitiven Pixeln, welche auftreffende Photonen in elektrische Ladungen wandeln. Je nach Aufbau der Halbleiterstruktur können diese als Frontside- oder Backside-Illuminated CCDs ausgeführt sein. Diese Ladungen werden in der Halbleiterstruktur in so genannten Potentialtöpfen gesammelt und dann als analoge Ladungen an einen Ausgang verschoben (=austakten), wo die gesammelten Ladungen jedes einzelnen Pixels sukzessive zu einer der Ladungsmenge proportionalen Spannung gewandelt werden bzw. eine Wandlung in einen, der Ladungsträgerzahl entsprechenden Digitalwert erfolgt. Dieses Austakten erfolgt durch ein Verschieben der Potentialtöpfe mit den darin befindlichen Ladungen in Richtung Ausgang, in einer Art linearem Schieberegister (auch Bucket-Brigade genannt), wofür verschiedene Technologien (etwa durch zwei, drei oder vierphasiges Austakten) bekannt sind.

Um Blooming- und/oder Smearing-Effekte zu reduzieren, sind CCDs bekannt, welche nach dem Frame- oder Interline-Transfer-Prinzip oder einer Kombination dieser beiden Prinzipien arbeiten. Bei diesen werden die Ladungen nach einer definierten Belichtungszeit in einen abgedunkelten Halbleiter-Bereich transferiert, von welchem sie dann ausgelesen werden.

Es sind bei TV-Kameras beispielsweise Flächen-CCD-Chips bekannt, bei welchen ein Verschieben der Ladungen von der photosensitiven Fläche in einen nicht-photoempfindlichen (z.B. lichtundurchlässig maskierten) Bauteilbereich erfolgt, welches bei geradzahligen Zeilen auf eine erste Seite und bei ungeradzahligen Zeilen auf eine zweite Seite durchgeführt wird. Durch eine derartige Aufteilung auf zwei Seiten, können Videobilder im Zeilensprungverfahren vorteilhaft ausgelesen werden, indem eine separierte Auslesung von geraden und ungeraden Zeilen erfolgt, wie dies etwa in US 7,315,329 beschrieben ist.

Nach einem ähnlichen Prinzip arbeiten in der Zeitlupentechnik auch so genannte Hochgeschwindigkeits-Kameras, mit welchen Bildaufnahmeraten mit einer hohen Anzahl von Bilder pro Sekunde erzielt werden sollen, wie beispielsweise in US 2003/0058355 beschreiben. Bei diesen werden die photoinduzierten Ladungen sequentiell in mehrere unterschiedliche Transferregister verschoben, auf welche anschließend jeweils unabhängig, also sozusagen parallel, der zeitaufwändige Auslese- (und Digitalisierungs-) Prozess angewandt wird. Durch diese mehrfache, parallele Auslesung können die geforderten hohen Bildraten erzielt werden, wodurch die Limitierung durch die Auslesezeit eines Einzelbildes umgangen werden kann. Jedoch mit dem Nachteil, dass hierfür ein entsprechend mehrfaches an Chipfläche für die Transferarrays sowie mehrere Ausgangsstufen benötigt werden.

Neben der CCD-Technologie können photosensitive Sensoren auch mit digitaler Schnittstelle ausgeführt sein, beispielsweise als Sensoren in CMOS-Technologie. Dabei kann jedem Erfassungsbereich des Sensors jeweils eine Auswerteschaltung zugeordnet sein, welche jeden Pixel Sensor-intern Analog/Digital wandelt, diese Digitalinformation puffert und zur Auslesung zur Verfügung stellt. Die Pufferung erfolgt dabei mittels eines digitalen Speichers für die digitalen Werte. Es kann durch die parallele Auslesung zwar die Zeit für das serielle Austakten jeder einzelnen Zeile vermieden werden, die Zeit für die Umwandlung der Ladungen in ein Spannungs- und weiter in ein digitales Signal sowie die Zeit für das sequenzielle Auslesen der Digitalwerte bleibt jedoch und limitiert die maximal mögliche Triggerrate, insbesondere wenn die Wandlung nicht vollständig gepipelined ist.

Es gibt auch Ansätze von Sensoren, welche versuchen die Vorteile von CCD- und CMOS- Sensoren zu vereinen, wie dies beispielsweise in "CCD structures implemented in standard 0.18 mm CMOS technology" von P.R. Rao, X. Wang and A.J.P. Theuwissen in "ELECTRONICS LETTERS" Vol. 44, No. 8 vom 10. April 2008 beschrieben wird. Jedoch werden die dabei erforderlichen, aufwändigen Fertigungsprozesse nur von sehr wenigen Herstellern beherrscht und die damit erzielbaren Vorteile rechtfertigen oft nicht den höheren Prozessaufwand bei der Fertigung.

Eine Aufgabe dieser Erfindung ist die Verbesserung eines Positionsgebers, speziell von einem Positionsgeber mit einem optischen Sensorelement, insbesondere eines bezüglich des Messzeitpunkts und der Positionsauflösung hochpräzisen Positionssensors.

Eine spezielle Aufgabe ist es, das Verhalten eines Positionsgebers bei zeitlich schnell aufeinander folgenden Triggersignalen zur Messwerterfassung zu verbessern.

Es ist anders Ausgedrückt eine Aufgabe dieser Erfindung einen Positionsgeber mit einem optischen Sensorelement zur Erfassung eines Positionscodes bereitzustellen, bei welchem der Zeitpunkt der Positionscode-Erfassung durch ein Triggersignal sehr präzise festgelegt werden kann und mit welchem der Positionscode auch bei einer Mehrzahl von schnell zeitlich aufeinander folgenden Triggersignalen für jeden dieser Triggerzeitpunkte individuell erfassbar bleibt.

Es ist auch eine Aufgabe eine vorteilhafte Ansteuerung eines optischen Sensorelements für eine Triggerbasierte Positionscodeerfassung bereitzustellen.

Eine grossindustrielle Herstellbarkeit, sowie eine Minituarisierung und Kostenreduktion des Positionsgebers ist ein weiterer Teil der Aufgabe.

Dabei ist auch die Bereitstellung eines Code-Erfassungs-Elements für einen hochpräzisen Positionssensor, welches eine triggerbasierte Codeerfassung auch in kurzer Zeitfolge ermöglicht, eine weitere Aufgabe dieser Erfindung, wobei insbesondere auch das Bereitstellen eines entsprechenden Ansteuerverfahrens und die zugehörige Ansteuerstruktur des Code-Erfassungs-Elements ein weiterführender Teil der Aufgabe ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung wird in der Folge in einer Ausführungsform eines eindimensionalen Zeilensensors erläutert. Es ist dem Fachmann jedoch offensichtlich, dass die Erfindung in ähnlicher Weise auch auf Positionsgeber anwendbar ist, welche mit mehreren photoempfindlichen Punktsensoren die nicht in einer zumindest annähernd durchgehenden, geraden Zeile von Erfassungsbereichen angeordnet sind, ausgestattet sind, also zwingend eine durchgängige Gerade bilden.

Ein erfindungsgemässer Positionsgeber hat einen Positionscode und ein optisches Sensorelement zur Erfassung zumindest eines Teils des Positionscodes. Das Sensorelement weist dabei eine Zeile von photosensitiven Erfassungsbereichen, welche auftreffende Photonen in elektrische Ladungen wandeln und eine Auslesestruktur zur Ausgabe eines elektrischen Datensignals entsprechend der gespeicherten elektrischen Ladungen auf. Die Auslesestruktur kann einen Zeilenweisen (=parallelen) oder Elementweisen (=seriellen) Auslesevorgang durchführen.

Erfindungsgemäss weist das Sensorelement zur temporären Speicherung der elektrischen Ladungen eine analoge Speicherstruktur mit einer Anzahl von N > 1 Zeilen photounempfindlicher analoger Speicherzellen sowie eine elektrische Schaltstruktur auf, mit welcher zwischen den Erfassungsbereichen, den Speicherzellen und der Auslesezeile ein Ladungstransfer durchführbar ist. Der Ladungstransfer zwischen den Erfassungsbereichen, den Speichern und der Auslesestruktur kann dabei insbesondere zeilenweise erfolgen.

Anders ausgedrückt handelt es sich erfindungsgemäss um einen Positionsgeber mit einem photoempfindlichen Sensor-Array, welcher mehrere Werte von Beleuchtungszuständen im Sensor analog und in schneller zeitlicher Folge puffern kann, sodass in kurzen Zeitabständen mehrere Messungen durchgeführt und gepuffert werden können, welche erst zu einem späteren Zeitpunkt ausgelesen werden können. Dabei kann insbesondere die Auslesedauer auch länger sein als die kurzen Zeitabstände zwischen den Messungen. Das Auslösen des Erfassens der Werte von Beleuchtungszuständen kann dabei durch ein, elektrisches Triggersignal ausgelöst werden.

Die Schaltstruktur kann derart ausgebildet sein, dass durch ein Auslöse- oder Triggersignal ein Zeitpunkt eines Erfassens des Positionscodes und Transferierens der Ladungen von den Erfassungsbereichen in die Speicherstruktur bestimmbar ist und durch ein zum Auslösesignal asynchrones - also vom Auslösesignal zeitlich unabhängiges - Auslesesignal ein Zeitpunkt der Ausgabe durch die Auslesestruktur bestimmbar ist.

Die Erfindung betrifft auch einen Positionsgeber bei welchem das Sensorelement zur temporären Speicherung der elektrischen Ladungen eine analoge Speicherstruktur mit einer Anzahl von N > 1 Zeilen photounempfindlicher analoger Speicherzellen ausgebildet ist. Dabei ist die Anzahl der Speicherzeilen größer als jene der Erfassungszeilen, insbesondere ein vielfaches davon. Das Sensorelement weist dabei eine elektrische Schaltstruktur auf, mit welcher zwischen den Erfassungsbereichen, den Speicherzellen und der Auslesestruktur ein Ladungstransfer durchführbar ist, und welche derart ausgebildet ist, dass der Ladungstransfer zwischen den Zeilen von Speicherzellen für einzelne Zeilen oder für ein Subset der Zeilen der Speicherstruktur durchführbar ist. Insbesondere kann dabei ein oberer Teil der Zeilen der Speicherstruktur unabhängig von einem unteren Teil der Zeilen der Speicherstruktur verschiebbar sein.

Eine Ausführungsform des Positionsgebers kann dabei eine einzige Zeile von photosensitiven Erfassungsbereichen, einer einzige Auslesestruktur und zumindest N ≥ 2, insbesondere N ≥ 4, Zeilen von Speicherzellen aufweist.

Mit der Schaltstruktur ist dabei der Transfer der elektrischen Ladungen
- zwischen der Zeile von Erfassungsbereichen und einer der Zeilen analoger Speicherzellen - zu einem durch das Auslösesignal vorgegebenen Erfassungszeitpunkt, sowie
- zwischen den Zeilen analoger Speicherzellen untereinander, insbesondere wobei der Transfer für jede dieser Zeilen oder für eine echte Teilmenge (als definierbares Subset) der Anzahl der Zeilen der Speicherstruktur einzeln oder selektiv ansteuerbar ist, und
- zwischen zumindest einer der Zeilen analoger Speicherzellen und der Auslesestruktur - durch das Auslesesignal zur Auslesung des zum zugehörigen Auslösezeitpunkt erfassten Positionscodes,
durchführbar.

Dabei ist also zwischen einer ersten Erfassung und Abschluss einer zugehörigen ersten Auslesung der ersten Erfassung, zumindest eine zweite Erfassung durchführbar, deren Ladungen in der Speicherstruktur temporär analog gespeichert werden, und welche zu einem späteren Zeitpunkt in einer zumindest zweiten, auf die erste folgenden, Auslesung auslesbar ist. Somit ist eine zweite Auslösung noch vor Beendigung der ersten Auslesung möglich. Durch erfindungsgemässe Anwendung von analogen Speichern, ist eine sehr schnelle zeitliche Aufeinanderfolge von mehreren Auslösungen möglich (insofern die Speicherstruktur über freie Speicherzeilen verfügt), welche unabhängig von der Auslesedauer ist.

Das Sensorelement kann eine Ableitstruktur aufweisen, welche derart ausgebildet ist, dass allenfalls in einer der analogen Speicherzellen vorhandene Ladungen abgeleitet werden können, bevor ein Ladungstransfer in diese Speicherzellen erfolgt. Dabei kann die Ableitstruktur nicht nur auf die ganze sondern insbesondere selektiv auf eine Teilmenge der Anzahl N der Zeilen der analoge Speicherstruktur anwendbar sein, speziell auf einzelne Zeilen der Speicherstruktur.

Die Speicherstruktur bzw. deren Ansteuerlogik kann eine Speicherverwaltung aufweisen, welche anhand des Auslösesignals und des Auslesesignals den Ladungstransfer steuert. Diese Speicherverwaltung kann dabei derart ausgebildet sein, dass anhand des Auslesesignals ein Transferieren, also eine Verschiebung, der Ladungen in der Speicherstruktur in Richtung der Auslesestruktur sowie die Ausgabe des Datensignals anhand der analogen Speicherwerte durch die Auslesestruktur erfolgt. Zugleich kann die Speicherverwaltung dabei derart ausgebildet sein, dass anhand des Auslösesignals ein Transferieren, also eine Verschiebung, der Ladungen aus den Erfassungsbereichen in die Speicherstruktur erfolgt. Diese Verschiebung kann speziell in eine der Auslesestruktur am nächsten liegende Zeile der Speicherstruktur erfolgen, in welcher noch keine Ladungen von vorhergegangenen Auslösungen gespeichert sind. Hierzu ist die Speicherstruktur derart ausgebildet sein, dass nicht nur die Gestammtheit der Speicherstruktur zeilenweise verschiebbar ist, sondern selektiv auch nur Teilbereiche oder einzelne Zeilen der Speicherstruktur verschiebbar sind. Diese beiden Funktionen der Speicherverwaltung können dabei (bis auf Trivialitäten) unabhängig voneinander ausgeführt werden, also insbesondere kann die Ausgabe asynchron zur Auslösung erfolgen.

Das Sensorelement kann mit einer CCD mit CMOS-Struktur auf einem gemeinsamen Halbleitersubstrat aufgebaut sein. Insbesondere kann dabei die Speicherstruktur in CCD-Technologie und die Auslesestruktur in CMOS-Technologie ausgeführt sein.

Das Sensorelement kann mit einer Correlated Double Sampling (CDS) Struktur ausgeführt sein. Insbesondere kann dies in jener Zeile der Speicherstruktur ausgeführt sein aus welcher der Transfer in die Auslesestruktur erfolgt (bzw. in der Auslesestruktur selbst).

Die Zeile von Erfassungsbereichen kann zumindest ein Dunkelpixel aufweisen, welches von auftreffenden Photonen geschützt ist und in welchem keine Ladungen durch Photonen generiert werden. Die Ladungen (insbesondere parasitäre Ladungen) dieses Dunkelpixels werden beim zeilenweisen Transfer als Dunkelreferenz mitverschoben. Die Dunkelreferenz kann zur Verbesserung der Messsignale genutzt werden, insbesondere im Rahmen des oben erwähnten CDS.

Neben diesem ersten Schritt, mit welchem eine Verbesserung des Sensors bezüglich den Triggeranforderungen in einem Positionsgeber erzielt werden kann, kann der zuvor beschriebene, erfindungsgemäße Sensor und dessen Ansteuerung neben der Anwendung in der obig beschriebenen Form in einem weitern Schritt auch noch bezüglich der erzielbaren Signalqualität verbessert werden. Ein oben beschriebener, erfindungsgemäßer Sensor ist in vielen Anwendungen - auch ohne die im Folgenden erläuterte Erweiterung, welche durchaus als eigenständige Erfindung angesehen werden kann - anwendbar, jedoch lässt sich dieser weiter optimieren, wie die folgende weiterbildende Ausführungsform erläutert.

Speziell durch die erfindungsgemäße, triggerbasierte Ansteuerung können sich in längeren Zeitdauern ohne Triggerung Leckladungen (z.B. thermisch generierte Elektronen, ...) in den analogen Speichern (sowohl in den durch zuvor erfasste Photoladungen benutzten als auch den unbenutzten Speichern) sammeln, welche sich mit den eigentlich auszulesenden, photoinduzierten Ladungen kumulieren und das Ausleseergebnis beeinträchtigen oder verfälschen. Auch durch die nicht fixe Zykluszeit der Verschiebung und Auslesung der Zeilen bei einer auf einem externen, asynchronen triggerbasierten Erfassung, sind die jeweils vorherrschenden Bedingungen vor jeder Auslesung nicht mehr zwingend gleich, wie dies etwa bei konstanten Ausleseraten der Fall ist. Beispielsweise werden zwischen zwei zeitlich kurz aufeinander folgenden Triggerungen weniger thermische Ladungen generiert als bei Triggersignalen mit größerem zeitlichem Abstand. Bei der im Stand der Technik angewandten fixen Frame-Rate der Auslesung, sind die Bedingungen im Sensor für zwei aufeinander folgende Auslesungen quasi gleich, wodurch beispielsweise ein durchschnittlicher Dunkel-Wert von den Messwerten abgezogen werden kann oder andersartige Mittelungen zur Signalqualitätsverbesserung und Rauschreduzierung anwendbar sind.

Durch eine an diese Erkenntnisse angepasste Rücksetz-Strategie der Speicher und einer entsprechenden Ansteuerung bzw. Rücksetzstruktur für die Speicherzellen sind hier weitere erfindungsgemässe Verbesserungen erzielbar.

So können etwa die leeren oder unbenutzten Speicherzellen, welche keine ausgelesenen Photoladungen enthalten, jeweils vor der Verschiebung von Photoladungen in diese auf einen wohldefinierten Wert zurückgesetzt werden, indem allenfalls sich darin angesammelte parasitäre Ladungen abgeleitet werden.

Ein derartiges Rücksetzen kann etwa erfolgen, indem ungenutzte Speicherzellen stets ein Potentialgefälle hin zu einem Ableitkanal (Scavenger, Gutter) aufweisen, welches erst vor dem Übertragen der Ladung in diese Zelle aufgehoben wird. Hierfür kann im Halbleiter eine entsprechende Rücksetz-Struktur für die Speicher vorgesehen sein, welche von einer Ansteuerschaltung entsprechend angesteuert wird.

Auch kann alternativ oder zusätzlich gemeinsam mit den Photoladungen jeweils ein oder mehrere Dunkel-Pixel mitverschoben werden. Die sich darin angesammelten Ladungen können bei der Auswertung als Referenzwert für den Dunkelwert herangezogen werden und beispielsweise von den Messwerten subtrahiert werden, was dem Prinzip eines Correlated Double Samplings entspricht.

Neben den Hardware-Optimierungen kann auch eine numerische Verbesserung erzielt werden, indem beispielsweise die Temperatur des Sensors bestimmt wird und anhand dieser sowie anhand der Zeit zwischen Photogenerierung der Ladungen und deren Auslesungen auf Basis eines numerischen Models des Halbleiters, die statistisch zu erwartende thermisch generierte Ladungsmenge errechnet wird, welche dann im Rahmen der Auswertung numerisch kompensiert werden kann.

Um jene Ladungen, welche zwischen zwei Trigger-Events von den auftreffenden Photonen erzeugt werden, abzuleiten, können auch so genannte Trash-Zeilen im Speicher benutzt werden, in welche bei der Triggerung die sich zuvor angesammelten Ladungen abgeleitet werden, um für den Messwert zum Triggerzeitpunkt einen Definierten Zustand der Photozelle zu erzielen. Nach der Belichtungszeit wird dann erst die eigentliche Messladung in die nächste Speicherzeile verschoben. Beim Auslesen werden dabei nur die Speicherzeilen mit den Messwerten ausgelesen, die Ladungen der Trash-Zeilen müssen nicht notwendigerweise ausgelesen werden, sondern können ohne Auslesung direkt abgeleitet werden. Um bei längerem Ausbleiben eines Triggersignals ein Überlaufen von Ladungen aus beleuchteten Photozellen in andere Chip-Bereiche zu vermeiden, können so genannten Overflow-Drains vorgesehen werden, welche Ladungsträger gezielt ableiten, bevor diese bei erreichen einer Sättigung Gefahr laufen unerwünschterweise in benachbarte Pixel oder Speicherzellen überzulaufen - ähnlich wie diese zur Vermeidung vom Smear-Effekten bei photographischen Sensoren bekannt ist. Durch ein derartiges Trash-Zeilen-Prinzip wird zwar entsprechend eine grössere Anzahl an Speicherzeilen benötigt, welche nicht zur Positionsbestimmung beitragen, jedoch kann hierbei eine homogene, einfach zu handhabende Halbleiterstruktur angewandt werden.

Alternativ kann für die Ableitung von Ladungen zwischen den Trigger-Events eine eigens dafür vorgesehene Struktur, insbesondere bei den Photozellen, vorgesehen werden, welche beispielsweise bei Triggerung die zu bestimmenden Ladungen in eine erste Richtung (z.B. nach unten, also in Richtung der und Auslesezeile) in die Speicher-Struktur verschiebt. Ohne Triggerung werden die unerwünschten Ladungen jedoch in eine zweite Richtung (z.B. nach oben) - zu einer AbleitStruktur verschoben.

In einer Ausführungsform kann beispielsweise in jener Zeit, in welcher kein Triggersignal auftritt, ein direktes Ableiten der Ladungen aus den Photozellen (und eventuell auch in zumindest der ersten Speicherzeile) durchgeführt werden. Mit Auftreten eines Triggersignals wird gegenüber dieser Ableitung eine Potentialbarriere aufgebaut, welche für eine Belichtungszeit - welche auch einstellbar gestaltet werden kann - aufrechterhalten wird, sodass die Photoladungen gesammelt werden. Diese Photoladungen werden durch ein Potentialgefälle hin zu einer unbenutzten Speicherzelle verschoben. Darauf folgend wird wiederum ein Potentialgefälle von der Photozelle hin zur Ableitstruktur hergestellt. Je nach Belegungs-Status der analogen Speicherstruktur - also abhängig davon in welchen der Speicher-Zeilen erfasste Photoladungen gespeichert sind und in welchen nicht - werden die Photoladungen hin zur Auslese-Struktur verschoben. In jeder Zeile kann dabei auch zumindest ein Dunkelpixel mitverschoben werden, welches keine Photoladungen sonder nur sich sammelnde, parasitäre Ladungen enthält. Durch Berücksichtigung des Ladungswertes dieses/dieser Dunkelpixels bei der Auswertung können etliche parasitäre Effekte zumindest teilweise kompensiert werden, wie dies beispielsweise etwa auch in US 2012/0081590 oder anderswo beschrieben ist.

Die Erfindung betrifft auch ein Verfahren zur optischen Erfassung zumindest eines Teils eines Positionscodes durch eine Zeile von photosensitiven Erfassungselementen, wobei das Verfahren in den Erfassungsbereichen ein Erfassen und Umwandeln von Photonen in elektrische Ladungen und in einer Auslesestruktur ein - durch ein Auslesesignal ausgelöstes - Ausgeben eines den elektrischen Ladungen entsprechenden elektrischen Datensignals durchführt.

Erfindungsgemäss wird dabei ein - durch ein Auslösesignal ausgelöstes - Verschieben der elektrischen Ladungen aus den Erfassungsbereichen in eine Speicherstruktur mit N>1 Zeilen von analogen Speicherzellen und ein temporäres Zwischenspeichern der analogen Ladungen in dieser Speicherstruktur bevor diese mittels der Auslesestruktur ausgegeben werden. Dabei ist durch das Zwischenspeichern das Erfassen gegenüber dem Ausgeben asynchron, insbesondere durch zwei unabhängige Ansteuersignale gesteuert, ausführbar.

Das Verfahren kann mittels einer Schaltstruktur - bedingt durch ein Auslösesignal- ein Verschieben der Ladungen aus der Zeile von photosensitiven Erfassungsbereichen in eine der Zeilen der analogen Speicherstruktur durchführen. Weiters kann das Verfahren mittels der Schaltstruktur - bedingt durch ein Auslesesignal - ein Verschieben von Ladungen aus einer der Zeilen der analogen Speicherstruktur in eine Auslesestruktur und eine Ausgabe des elektrischen Datensignals aus der Auslesestruktur durchführen.

Dabei kann das auslösesignalbedingte Verschieben mit einem Nachrücken von Zeilen der Speicherstruktur in Richtung Auslesezeile erfolgen, speziell von jenen Zeilen der Speicherstruktur, in welchen erfasste Ladungen zwischengespeichert sind. Dieses Nachrücken bedingt, dass die Schaltstruktur derart ausgebildet ist, dass das Verschieben in der Speicherstruktur selektiv für einzelne Zeilen bzw. Gruppen von Zeilen der Speicherstruktur durchgeführt werden kann, während andere Zeilen der Speicherstruktur nicht verschoben werden. Dabei kann auch eine Auswahl einer Teilmenge von mehreren Zeilen in der Speicherstruktur zum Nachrücken gemeinsam verschoben werden, während andere, schon belegte Zeilen der Speicherstruktur nicht verschoben werden.

Das Verfahren kann das temporäre Zwischenspeichern der analogen Ladungen in der Speicherstruktur vor dem Ausgeben mit einem selektiven Transferieren von einzelnen Zeilen oder einem Subset der Zeilen in der Speicherstruktur durchführen. Dabei kann insbesondere ein oberer Teil der Zeilen der Speicherstruktur unabhängig von einem unteren Teil der Zeilen der Speicherstruktur verschiebbar sein, wobei durch das Zwischenspeichern das Erfassen gegenüber dem Ausgeben asynchron ausführbar ist.

Dabei ist das Auslesesignal zeitlich unabhängig vom Auslösesignal steuerbar. Die beiden Signale können also asynchron zueinander sein.

In einer speziellen Ausführungsform kann das Verfahren die Speicherstruktur als zeilenweises Schieberegister, insbesondere nach einem First-In First-Out Prinzip, verwalten. Bei der Verwaltung kann insbesondere ein selektives Löschen und verschieben einer Teilmenge der Zeilen der Speicherstruktur durchgeführt werden. Speziell kann dabei vor dem Verschieben von Ladungen in eine Ziel-Zeile der Speicherstruktur ein selektives Löschen dieser Ziel-Zeile stattfinden.

In einer Ausführungsform kann das erfindungsgemässe Verfahren abhängig vom Auslösesignal die Ladungen von den Erfassungsbereichen entweder
▪ in einer Ableitstruktur abgeleitet oder
▪ in der analogen Speicherstruktur gespeichert werden.

Dabei können Ladungen in der Speicherstruktur in jene unbelegte Zeile verschoben werden, welche der Auslesestruktur am nächsten liegt. Die Ladungen aus der Photozeile werden also z.B. selektiv Zeile für Zeile in Richtung Auslesestruktur verschoben bis diese direkt vor jene bereits belegte Zeile Nachgerückt sind, in welcher bereits Ladungen einer vorangehenden Erfassung gespeichert sind. Die bereits belegten Zeilen der Speicherstruktur werden dabei also nicht abhängig vom Auslösesignal verschoben.

Das erfindungsgemässe Verfahren kann, Ausgelöst durch das Auslösesignal,
▪ ein Verschieben von sich zuvor angesammelten parasitären Ladungen aus den Erfassungsbereichen in eine erste Zeile der Speicherstruktur, welche als codeinformationslose Trash-Zeile genutzt wird, gefolgt von
▪ einem Erfassen von Photonen zur Ermittlung des Positionscodes und
▪ einem Verschieben der erfassten Ladungen aus den Erfassungsbereichen in eine zweite Zeile der Speicherstruktur, welche als Mess-Zeile mit Codeinformation genutzt wird,
durchführen. Insbesondere können dabei die Ladungen der Trash-Zeile zur Ableitung in eine Ableitstruktur und jene der Mess-Zeilen zur Ausgabe in die Auslesestruktur verschoben werden.

Die Erfindung umfasst auch ein Computerprogrammprodukt mit Programmcode, der auf einem maschinenlesbaren Träger gespeichert ist, als festverdrahtete Logik ausgeführt ist oder als Computer-Daten-Signal, verkörpert durch eine elektromagnetische Welle übertragen wird. Der Programmcode führt dabei das erfindungsgemässen Verfahren durch, insbesondere wobei der Programmcode ein Ansteuern eines Ladungstransfers in einem erfindungsgemässen Positionsgebers durchführt. Dies gilt speziell, wenn der Programmcode in einer Auswerteeinheit eines erfindungsgemässen Positionsgebers und/oder in einer hiermit verbundenen Auswerteschaltung ausgeführt wird.

Das erfindungsgemäße Verfahren und die erfindungsgemäße Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Die gezeigten Figuren sind dabei nicht als Maßstäblich zu betrachten. Im Einzelnen zeigen:
Fig. 1 eine erste erfindungsgemässe Ausführungsform eines Positionsgebers mit einem optischen Sensorelement mit mehreren Zeilen von analogen Speicherzellen;
Fig. 2 eine zweite Illustration einer erfindungsgemässen Ausführungsform eines Positionsgebers mit einem optischen Sensorelement mit mehreren Zeilen von analogen Speicherzellen;
Fig. 3 eine dritte erfindungsgemässe Ausführungsform eines Positionsgebers mit einem Sensorelement mit beispielhaften vier analogen Speicherzeilen für eine einzige Photoempfindliche Zeile;
Fig. 4 ein erstes Timing-Diagramm einer Signalverarbeitung in einer erfindungsgemässen Ausführungsform eines Positionsgebers;
Fig. 5 eine Illustration eines beispielhaften Trigger- und Auslesevorgangs in einem erfindungsgemässen Positionsgeber;
Fig. 6 ein zweites Timing-Diagramm der Signalverarbeitung in einer erfindungsgemässen Ausführungsform eines Positionsgebers;
Fig. 7 ein Blockdiagramm einer Ausführungsform eines erfindungsgemässen Positionsgebers;
Fig. 8 ein Ablaufdiagramm einer Ausführungsform eines Verfahrens zur optischen Erfassung eines Positionscodes;
Fig. 9 eine erste beispielhafte Ausführungsform eines erfindungsgemässen Positionsgebers;
Fig. 10 eine zweite beispielhafte Ausführungsform eines erfindungsgemässen Positionsgebers;
Fig. 11 eine dritte beispielhafte Ausführungsform eines erfindungsgemässen Positionsgebers;
Fig. 12 ein erstes Anwendungsbeispiel von erfindungsgemässen Positionsgebern in einem Koordinatenmessgerät;
Fig. 13 ein zweites Anwendungsbeispiel von erfindungsgemässen Positionsgebern in einem geodätischen Messgerät;
Fig. 14a bis 14e ein drittes Anwendungsbeispiel von erfindungsgemässen Positionsgebern in einem Koordinatenmessgerät als ein Beispiel für eine Messung mit mehreren, schnell aufeinander folgenden Triggersignalen;
Fig. 15 eine schematische Darstellung einer vierten Ausführungsform eines erfindungsgemässen Positionsgebers;
Fig. 16 eine schematische Darstellung einer fünften Ausführungsform eines erfindungsgemässen Positionsgebers;
Fig. 17 eine schematische Darstellung einer sechsten Ausführungsform eines erfindungsgemässen Positionsgebers;
Fig. 18 eine schematische Darstellung einer siebten Ausführungsform eines erfindungsgemässen Positionsgebers.

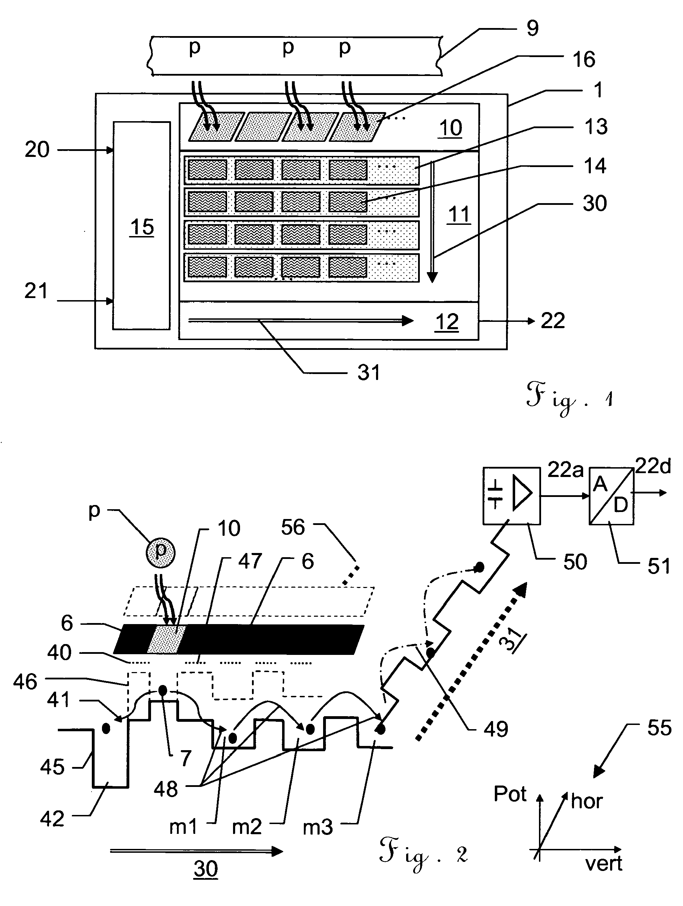

**Fig. 1** zeigt einen erfindungsgemäßen Positionsgeber 1 - hier anhand eines Zeilensensors erläutert - welcher zumindest einen Teil eines Positionscodes 9 optisch erfasst. Der Positionscode 9 ist also von einem optischen Sensorelement in einer Form erfassbar, beispielsweise durch dessen Abbildung, Schattenwurf, Projektion, Interferenzmusterbildung, etc., wobei der Code etwa in Form von Kontrastflächen, Lichtdurchlässigen und Lichtundurchlässigen Bereichen, Oberflächentexturen, etc. gebildet sein kann. Das darin enthaltene Sensorelement verfügt über einen photoaktiven Erfassungsbereich 10 welchem eine Speicherstruktur 11 mit mehreren Zeilen 13 von analogen Speicherzellen 14 pro photoaktivem Pixel 16 zugeordnet ist. Es stehen somit für eine Photoempfängerzeile 10 mehrere Zeilen 13 von nicht photoaktiven analogen Speichern 14 zur Verfügung, welche die in den Photoempfängern 16 durch die auftreffenden Photonen p erzeugten freien elektrischen Ladungen speichern können. Eine derartige Struktur kann beispielsweise technologisch als Halbleiterbauelement in CCD-Technologie oder in CMOS mit CCD Struktur gefertigt sein. Sind die Strukturgröße der Speicher 14 im Vergleich zu den photosensitiven Bereichen 16 kleiner, so erlaubt dies eine kompakte Unterbringung auf dem Halbleitersubstrat.

In einer Ausführungsform sind die Inhalte der analogen Speicherstruktur 11 dabei in der Figur vertikal nach unten verschiebbar (durch den Pfeil 30 symbolisiert). Eine einfachste Ausführungsform einer Auslesestruktur 12 kann etwa als CCD-Zeile mit einer Struktur zur seriellen Verschiebung der Ladungen innerhalb der Zeile hin zu einem Ausgabeschaltkreis implementiert sein. Die Auslesestruktur 12 kann dabei in Form einer Auslesezeile ausgebildet sein, welche als unterste Zeile der CCD-Struktur über eine horizontale Schiebefunktionalität 31 verfügt, mit welcher ein serielles Auslesen der gespeicherten PixelLadungen durchführbar ist, um über den Ausgabeschaltkreis das elektrische Datensignal 22 am Ausgang zu erhalten, welches von der jeweiligen Anzahl der Pixel-Ladungsträger abhängt. Das Auslesen kann auch vollständig oder zumindest teilweise parallel durchgeführt werden.

Die Schaltstruktur 15 dient zur Ansteuerung der Verschiebungen der Ladungen, welche durch ein externes Triggersignal 20 und ein Auslesesignal 21 koordiniert werden.

**Fig. 2** zeigt eine etwas detailliertere, jedoch immer noch schematische, Darstellung einer Ausführungsform. Ein Photosensitives Pixel 16 generiert bei Auftreffen eines Photons p ein Elektronen-Loch-Paar, wobei das freie Elektron 7 darunter in einem Potentialtopf aufgefangen wird. Durch die punktiert dargestellten Elektroden 47 kann die Form des Potentialtopfs zwischen der durchgezogenen 45 und den gestrichelten 46 Linien variiert werden (in Richtung der pot-Achse des Koordinatensystems 55) und somit durch entsprechende Ansteuerung der Gates 47, die Ladungen 7 vertikal (vert-Achse des Koordinatensystems 55) verschoben werden, wie dies die Pfeile 48 andeuten. Diese Potentialtöpfe sind dabei vor Lichteinstrahlung geschützt (etwa durch die Maske 6), um eine Generierung von weiteren Photoelektronen zu verhindern. In den Potentialtöpfen können die Photoelektronen gespeichert werden, weshalb diese auch als analoge Speicherzellen m1, m2, m3 bezeichnet werden. (In anderen Figuren für die Speicherzellen auch allgemein, unabhängig von deren Ordnung, das Bezugszeichen 14 verwendet). Die hier dargestellte Anordnung ist im Positionsgeber - wie durch die Punkte 56 angedeutet - mehrfach nebeneinander angeordnet, um eine Zeile von photosensitiven Erfassungsbereichen 16 mit jeweils zugeordneten Speicherzellen m1, m2, m3 (auch in Zeilenanordnungen) zu erhalten.

Die unterste Zeile ist dabei als Auslesestruktur 12 ausgebildet, im gezeigten Fall ein horizontales Schieberegister (hor-Achse des Koordinatensystems 55), mit dessen Hilfe die Pixelladungen 7 pixelweise verschoben werden können (Pfeil 49), hin zu einer Ladungs-Spannungs-Wandlung 50 zur Umwandlung in ein analoges elektrisches Datensignal 22a welches sensorintern oder sensorextern mit einem Analog-Digital-Konverter 51 zu einem digitalen elektrischen Datensignal 22d umgewandelt werden kann.

Das auslösen der Erfassung durch das Triggersignal kann entweder mit konstanter Rate oder aufgrund eines externen - wie auch immer gearteten - zu einem beliebigen, nichtdeterministischen Zeitpunkt auftretenden Trigger-Signals oder auch einer Kombination von beiden erfolgen. Speziell bei azyklischem Triggern, wie dies etwa bei von externen Quellen, wie etwa eines Tastkopfes eines Koordinatenmessgeräts, eines Tasters, Endschalters oder einer sonstigen Quelle für Auslösesignale, generierten Triggersignalen auftritt, kann es weiters erforderlich sein spezielle Vorkehrungen zum Löschen der CCD Struktur vorzusehen.

Bei Bildsensoren aus dem Stand der Technik wird jeweils der ganze CCD-Chip mit einem Reset-Signal gelöscht. Im Sinne der vorliegenden Erfindung ist eine Löschung des gesamten analogen Speichers jedoch nicht in allen Fällen zweckmäßig, da der analoge Speicher noch zuvor erfasste Zeilen von Messwerten enthalten kann, welche noch auszuwerten sind. Um im Rahmen der vorliegenden Erfindung dennoch definierte Zustände der Speicher gewährleisten zu können, ist in solchen Fällen bei einem Reset anders vorzugehen. Wenn die analoge Speicherstruktur keine Messwerte enthält, beispielsweise im Falle einer Konstantratenmessung bei welcher die Zeiten zwischen zwei Triggersignalen größer sind als die Zeit welche für das Auslesen benötigt wird, kann jeweils die gesamte analoge Speicherstruktur gelöscht werden (was die Ansteuerung des Löschens vereinfacht und wodurch eine höhere Zuverlässigkeit erzielt werden kann).

Unerwünscht eingesammelte und nicht auszuwertende Ladungen können beispielsweise nur nach unten geschoben werden und können dort alternativ zu einer Auslesung direkt abgeleitet werden (also nicht einer seriellen Auswertung zugeführt sondern insbesondere parallel abgeleitet werden). Dieses Ableiten kann beispielsweise ganz unten in der (oder im Anschluss an die) letzte Speicherzeile erfolgen, welche wahlweise entweder ausgelesen oder gelöscht werden kann.

Alternativ kann eine Ableitung von nicht auszuwertenden Ladungen, etwa solche, welche zwischen zwei Triggersignalen im Photoelement 16 angesammelt werden, auch direkt bei diesem, beispielsweise "nach Oben" abgeleitet werden. Dies ist in Fig. 2 ganz links dargestellt, indem ein weiteres Gate 40 eine Potentialbarriere hin zu einer Ableitung 42 (Gutter, Scavenger-Diode) ansteuert. Diese leitet allenfalls vorhandene Elektronen 7 vor dem Triggersignal in Richtung 41 ab, sodass vor der Erfassung der Photoladungen 7 ein definierter Zustand in Photozelle 16 und dem Potentialtopf m1 herrscht.

Im Rahmen der vorliegenden Erfindung können auch CDS (Correlated Double Sampling)-Strukturen angewandt werden, um das beim Auslesen eingebrachte Rauschen zu reduzieren, indem der Messwert jeweils zu einem Referenzwert in Bezug gebracht wird, wie es etwa in US 4,287,441 oder anderen Dokumenten erläutert wird. Auch kann bei Anwendung einer CDS-Auswertung beispielsweise auch darauf verzichtet werden die Auslesestruktur vor jeder Auslesung exakt zurückzusetzen. Bei einer differenziellen Wertbestimmung wird beispielsweise ein Zurücksetzen erst erforderlich, wenn die Ausleseschaltung ansonsten (potentiell) in Sättigung gehen würde. Zudem kann bei differenzieller Auswertung trotz CDS-Prinzip (für einen Grossteil der Pixel 16) pro Pixel nur einmalig ausgelesen und Digitalisiert werden, was die Auslesezeit gegenüber einem klassischen CDS mit jeweils einem Sampling des Referenzwertes vor der Übertragung der Pixelladung sowie danach, deutlich reduziert.

Wird Correlated Double Sampling (CDS) realisiert, kann dies in der untersten Zeile implementiert sein. Dabei kann die Ladung, die gerade ausgegeben wird, anstelle in einem Speicher der CCD-Struktur auch in Kondensatoren der CDS-Schaltung gespeichert werden. Zu welchem Zeitpunkt die Messsignale ins CDS geschoben werden, kann dabei durch Signale der Ansteuereinheit vorgegeben werden, entweder durch externe Signale oder in einer vorherbestimmten Abfolge. In einer Ausgestaltung kann beispielsweise immer direkt vor dem Ausgeben das Verschieben ins CDS durchgeführt werden. In diesem Fall werden Messsignale nach der Messung nicht in die unterste Zeile - welche nunmehr für das CDS reserviert ist - geschoben (wie dies der Einfachheit halber in den Figuren dargestellt ist), sondern in eine Zeile darüber. Erst mit dem Auslesesignal wird das CDS ausgeführt, die Messung 0 (m0) in die Auslesezeile geschoben und anschließend ausgegeben. Die Inhalte der darüber liegenden belegten Speicherzeilen können dabei oder danach entsprechend nachgerückt werden.

Auch können thermisch erzeugte Ladungsträger, der so genannte "Dunkelstrom", durch bekannte Methoden wie Mittelwertbildung, Auslesen von einem oder mehreren Dunkelpixeln, Kühlung des Sensors, etc. kompensiert bzw. vermindert werden. Eine Rauschreduktion durch langsameres Auslesen, ein so genanntes "slow scan", kann erfindungsgemäss ebenfalls angewandt werden. Da das Auslesen erfindungsgemäss nicht mehr zu einer Blockierung des Gebers für weitere Triggersignale führt, kann auch ein langsameres Auslesen angewandt werden. Es wirkt also die Auslesegeschwindigkeit nicht mehr beschränkend für die Triggerrate, sofern noch genügend freie Speicherzeilen verfügbar sind, insbesondere also sofern die kurzzeitige Triggerrate mal der Auslesezeit kleiner als die Anzahl der Speicherzeilen bleibt.

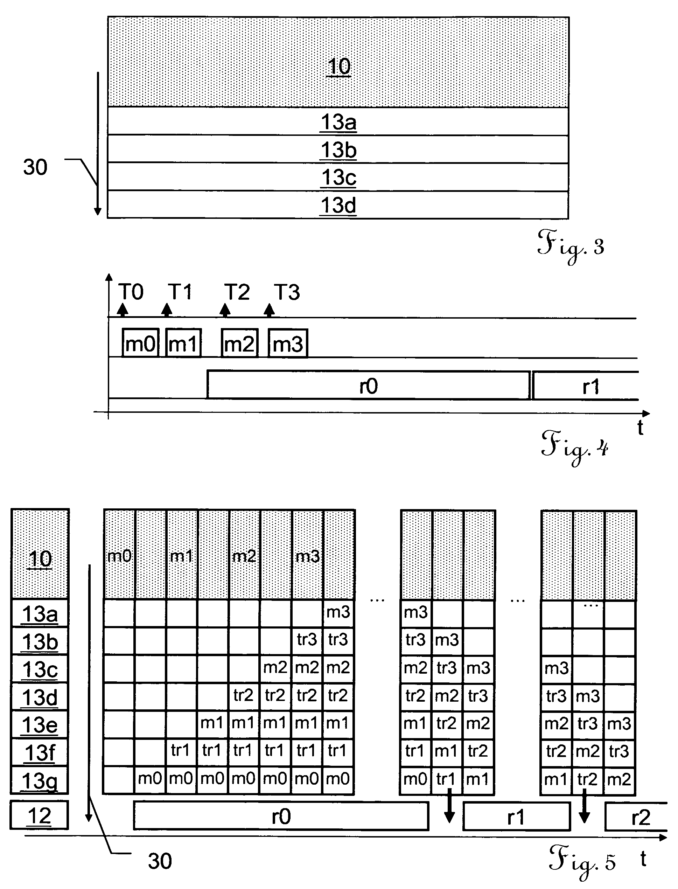

**Fig. 3** zeigt die aktive optische Fläche in Form einer Sensorzeile 10 und darunter eine Struktur zur analogen Speicherung 13a, 13b, 13c, 13d von bis zu vier Messungen. Die in der Sensorzeile generierten Photoladungen können in Richtung 30 in die Speicherstruktur und auch in dieser jeweils zeilenweise verschoben werden. Wie in der Figur symbolisiert, können die Bereiche zur analogen Speicherung 13a, 13b, 13c, 13d eine andere Fläche auf dem Halbleitersubstrat einnehmen als die optisch aktive Fläche. Die Speicherzellen können in ihren geometrischen Dimensionen insbesondere kleiner sein als die ihnen zugeordneten photosensitiven Bereiche.

Zur Beschreibung eines erfindungsgemässen Positionsgebers können dessen Ausführungsformen auch beschrieben werden, indem Richtungen angegeben werden. Die Bezeichnungen horizontal und vertikal, bzw. oben, unten, links und rechts, beziehen sich dabei auf die jeweils dargestellten Figuren und sind nicht absolut zu sehen. Die geometrischen Anordnungen der Strukturen in einer konkreten Halbleiterstruktur können also durchaus von diesen hier erwähnten, "logischen" Richtungen abweichen, sofern hierbei nicht explizit auf die Halbleiterstrukturanordnung verwiesen wird.

Es handelt sich um einen Positionsgeber 1 mit einem Sensorelement zur optischen Positionscodeerfassung mit einer horizontalen Photozeile 10 und einer vertikalen Struktur von mehreren (beispielhaft gezeigt vier Stück) horizontalen Analogspeicherzeilen 13a, 13b, 13c, 13d welche durch eine Schaltstruktur zur selektiven vertikalen Verschiebung 30 der Ladungen zwischen den einzelnen Analogspeicherzeilen 13a, 13b, 13c, 13d ansteuerbar sind.

Die unterste Zeile ist als Auslesestruktur zur parallelen oder seriellen Ausgabe der Ladungen (z.B. unter Wandlung in ein elektrisches Datensignal zur Weiterverarbeitung und Lagenbestimmung) ausgebildet.

Ausgelöst durch ein Triggersignal werden die photogenerierten Ladungen aus der Photozeile 10 (insbesondere sukzessive/seriell) vertikal in jene unbelegte Analogspeicherzeilen 13a, 13b, 13c, 13d verschoben, welche der Auslesezeile 10 am nächsten liegt, während die bereits belegten Zeilen nicht verschoben werden. Nach Abschluss eines Auslesevorgangs werden (allenfalls vorhandene) belegte Analogspeicherzeilen 13a, 13b, 13c, 13d vertikal eine Zeile nach unten in die Auslesezeile verschoben und von dort (vertikal oder horizontal) auf Basis eines Auslesesignals ausgelesen. Die weiter oben befindlichen, belegten Zeilen rücken nach dem Auslesen einer Zeile entsprechend nach.

Folglich sind, um eine derartige Verschiebbarkeit zu erzielen, die Zeilen der Speicherstruktur selektiv einzeln oder in Gruppen verschiebbar, wobei speziell eine gespaltene Verschiebbarkeit der Zeilen innerhalb der Speicherstruktur gegeben ist bei welcher ein selektiv wählbarer, oberer Zeilenbereich der Speicherstruktur zur Nachrückung aus der photoaktiven Zeile anhand des Auslösesignals verschiebbar ist und getrennt davon ein unterer Zeilenbereich der Speicherstruktur anhand des Auslesesignals in Richtung Auslesezeile verschiebbar ist. Die Lage der Grenze zwischen oberem und unterem Zeilenbereich ist dabei, abhängig vom Füllstand des Speichers, variabel. Da erfindungsgemäss Auslöse- und Auslesesignal asynchron zueinander auftreten können, können folglich auch Teile der Speicherstruktur asynchron zueinander verschoben werden.

In einer anderen Ausführungsform eines Sensorelements für einen erfindungsgemäßen Positionsgeber 1, kann dies hergestellt werden, indem eine standard-zweidimensionale Flächen-CCD-Struktur derart modifiziert wird, sodass nurmehr eine einzige Zeile 10 photoaktiv ist und alle weiteren Zeilen abgedunkelt, also mit einer Lichtundurchlässigen Schicht maskiert sind. Da diese maskierten - und daher nicht mehr lichtempfindlichen - Zeilen nun lediglich als Zeilenweise verschiebbare Ladungsspeicher genutzt werden können, ergibt sich bei entsprechender Ansteuerung einer erfindungsgemäßen Schaltstruktur, welche ein selektives verschieben von einzelnen Zeilen oder Teilbereichen aller Zeilen und nicht nur lediglich der gesamten Speicherstruktur ermöglicht, eine Ausführungsform, welche einen Zeilensensor realisiert. Der Zeilen-Takt zur Verschiebung der Ladungen aus der photoaktiven Zeile 10 ist dabei durch das Triggersignal bedingt. Beispielsweise könnte jeweils mit steigender und/oder fallender Flanke des Triggersignals eine Verschiebung der Photoladung aus der Zeile 10 in eine der abgedunkelten Zeilen 13a, 13b, 13c, - 13d erfolgen, also eine Verschiebung der Ladungen in Richtung der Auslesezeile bis zur letzten, noch nicht belegten Speicherzeile 13a, 13b, 13c, 13d vor dieser, wobei die belegten Speicherzeilen jedoch nicht mitverschoben werden..

**Fig. 4** zeigt ein beispielhaftes Trigger-Timing sowie die Zeitdauern des Messens (also der optischen Erfassung) und des Auslesens der Zeilen, dargestellt über einer horizontalen Zeitachse t. Jedes Triggersignal T0, T1, T2, - T3 in der oberen Zeile löst eine Messung (m0, m1, m2, m3) in der mittleren Zeile aus - das heißt die Ladungen des photosensitiven Elements 10 werden in analoge Speicher 13a, 13b, 13c, 13d verschoben. Zu einem späteren Zeitpunkt können diese Messungen aus den belegten analogen Speichern 13a, 13b, 13c, 13d analog ausgetaktet und beispielsweise mit einem A/D-Wandler digitalisiert werden, was in der unteren Zeile durch die zugehörigen Zeitdauern r0 und r1 dargestellt ist. Für das Triggern oben sowie für das Auslesen unten kann eine Signalisierung (z.B. über einen elektrischen Anschluss des Sensorelements) erfolgen. Das Erfassen oder Messen kann beispielsweise mit einer vorgegebenen, insbesondere konstanten, Belichtungsdauer m0, m1, m2, m3 erfolgen. Nachdem am Ende von r0 eine erste Zeile mit Speicherwerten m0 ausgegeben ist, kann darauf folgend, auch direkt im Anschluss, die nächste Zeile mit Speicherwerten m1 während der Zeit r1 ausgegeben werden indem diese nach unten in die Auslesestruktur verschoben wird.

Alternativ kann auch eine ganze Zeile oder Teile dieser, jeweils parallel mit mehreren A/D-Wandlern ausgewertet werden. Da durch die erfindungsgemäße analoge Speicherung, speziell bei hinreichender Speichertiefe der Speicherstruktur 11, die Auslesegeschwindigkeit nicht mehr der kritische Faktor bezüglich der zulässigen Zeitabstände zwischen zwei direkt aufeinander folgenden Triggersignalen(z.B. T0 und T1) ist, ist eine derartige Parallelisierung und deren Hardwareaufwand bei der Auslesung nicht mehr zwingend erforderlich um den Anforderungen bei temporären Bursts von einigen, schnell aufeinander folgenden Triggersignalen T0, T1, T2, T3 gerecht zu werden. Jedoch ist offensichtlich die Auslesegeschwindigkeit derart zu dimensionieren, dass diese zumindest bei durchschnittlicher, mittlerer Trigger-Rate ein Auslesen aller Werte ermöglicht - wozu bei Bedarf auch eine (zumindest Teil-)Parallelisierung der Auslesung angewandt werden kann. Im Rahmen derartiger Überlegungen bezüglich der Trigger- und Ausleseraten für den konkreten Anwendungsfall bestimmt sich auch die erforderliche Speichertiefe der analogen Speicherstruktur 11 - also wie viele Zeilen 13 analog gespeichert werden müssen um die Anforderungen der Anwendung zu erfüllen. Hierbei kann beispielsweise ein Schlimmstfall-Szenario herangezogen werden, oder es können auch statistische Methoden zur Anwendung gebracht werden.

**Fig. 5** zeigt eine Ausführungsform bei welcher die Schaffung eines definierten Zustands vor der Codeerfassung auf eine spezielle Weise gelöst wird.

Um für genaue Messungen immer gleiche Voraussetzungen im Positionsgeber 1 zu haben, ist es vorteilhaft, die aktive Sensorfläche 10 und die beteiligten analogen Speicherbereiche der Speicherstruktur 11 für jedes Triggersignal T0, T1, T2, T3 in einen definierten Zustand zu bringen, also beispielsweise Zurückzusetzen - was in Folge auch als Löschen bezeichnet wird. Im dem Stand der Technik wird bei CCDs ein derartiges Löschen immer auf die gesamte Struktur 11 angewandt, was wie beschrieben im vorliegenden Fall aber nicht immer möglich ist, da eine allenfalls vorhandene vorherige Messung noch gespeichert werden soll.

Um dies zu erreichen, können beispielsweise Trash-Zeilen tr in der Speicherstruktur 11 vorgesehen werden, welche Ladung zwischenspeichern, welche sich allenfalls in der Zeit zwischen der vorherigen Messung und der aktuellen Messung angesammelt hat. Diese unerwünschte Ladung, welche zwischen zwei Messungen entsteht (durch Belichtung, Dunkelströme, etc.), werden in diesen Trash-Zeilen tr gesammelt, jedoch nicht ausgewertet. Diese Trash-Zeilen tr können dabei gleich ausgebildet sein wie die Speicherzeilen, speziell werden also lediglich die vorhandenen Speicher der Struktur 11 entweder als Trash-Zeilen tr oder als Speicherzeilen m benutzt.

Die Trash-Zeilen tr können mit den auszuwertenden Zeilen in der Speicherstruktur mit nach unten geschoben werden und deren Ladungen können statt der Auswertung direkt einer Ableitung (z.B. nach Masse) zugeführt werden. Dieses Ableiten kann seriell durch austakten oder auch parallel für die ganze Zeile erfolgen. Lediglich die Zeilen, welche Messdaten enthalten, werden somit als Datensignal ausgegeben und einer Auswertung zugeführt.

Fig. 5 zeigt ein Beispiel einer solchen Ausführungsform, welche gegenüber Fig. 3 eine um drei Zeilen erweiterte Speicherstruktur 11 aufweist. Auch die Auslesestruktur 12 ist hier explizit dargestellt. Darunter ist der zeitliche Ablauf (mit demselben Timing wie in der vorherigen Figur) dargestellt. Darin ist auch die dabei durchzuführende, einzelne Verschiebung von Speicherzeilen für das Nachrücken der gerade erfassten Ladung hin zu einem untern, bereits belegten Teil der Speicherstruktur, welcher dabei nicht mitverschoben wird, ersichtlich.

Während der Messung m2 und m3 wird Messung m0 zwar schon als r0 ausgegeben, der analoge Zeilenspeicher ist aber noch belegt, bis die Zeile vollständig ausgegeben ist. Alternativ kann die Zeile nach dem CDS auch schon frei sein, beispielsweise indem die Ladungen zur seriellen Ausgabe in Kondensatoren zwischengespeichert werden. Erst im Anschluss an die Ausgabe von r0 werden die Speicherwerte nach unten verschoben und die erste Trash- oder Müll-Zeile tr1 kann gelöscht werden. Ist - wie oben als Alternative beschrieben - die Zeile schon frei, so kann schon während der Ausgabe von r0 das Verschieben der internen Speicherzeilen durch ein externes Signal veranlasst werden, beispielsweise auch durch ein weiteres Triggersignal, mit welchem eine neue Messung m1 auslöst wird. Anschließend ist das Messsignal der Messung m1 bereit zum Ausgeben und kann insbesondere direkt im Anschluss ausgegeben werden. Anschließend wird wieder um eins nach unten geschoben und Trash-Zeile tr2 kann gelöscht werden und im Anschluss die Messung m2 während der Auslesung r2 ausgegeben werden.

Alternativ kann eine Ableitung unerwünschter Trash-Zeilen auch weiter oben im Speicher erfolgen, wodurch weniger Trash-Speicherzeilen erforderlich sind. So kann etwa ein speziell dafür vorgesehene Trash-Speicherzeile "über" dem photosensitiven Element angeordnet sein und entsprechend Messwerte nach unten in das analoge Speicher-Array und Trash-Werte nach oben verschoben werden.

In einer Anderen Ausführungsform kann die Ableitung von unerwünschten Ladungen zwischen zwei Messwerterfassungen zu den Triggerzeitpunkten auch direkt am photosensitiven Element erfolgen, beispielsweise indem dessen Ausgang im Ruhezustand, also ohne Triggersignal, auf Masse oder einen Referenzpegel geschaltet wird und nur bei Triggerung die Ladungsträger akkumuliert und anschließend nach unten in das Array verschoben werden. Ein derartiges Prinzip wurde auch schon bei Fig. 2 (z.B. als Scavenger-Diode) erläutert.

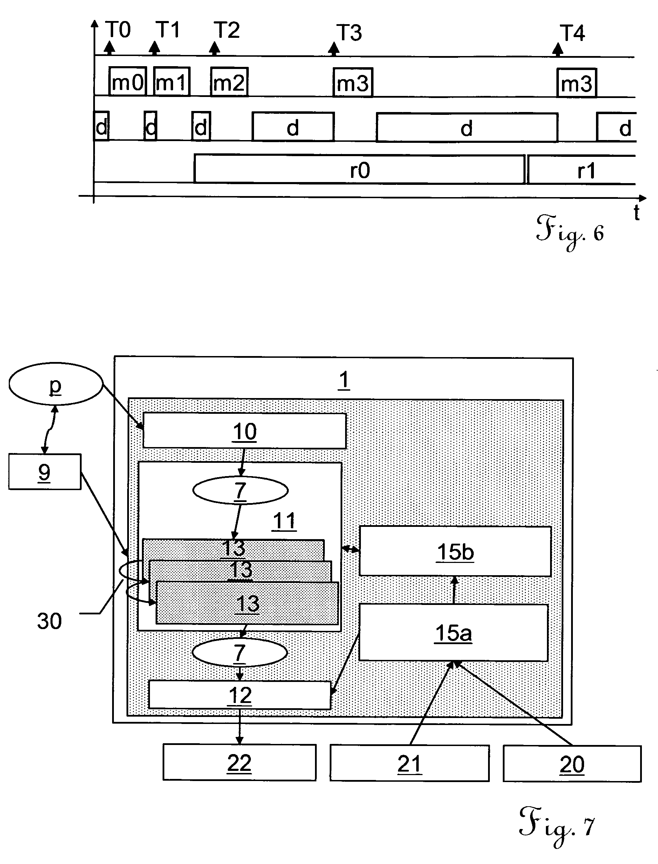

Ein Timing-Diagramm hierzu ist nochmals in **Fig. 6** gezeigt, wobei in der zweituntersten Zeile die Ansteuerung des Lösch-Gates d zur Ableitung unerwünschter Ladungen zwischen den Messungen hinzugekommen ist. Das Nachrücken der Speicherzeilen erfolgt dabei jeweils zwischen zwei Auslesevorgängen r0 und r1.

Dabei ist jedoch zu beachten, dass neben dem photosensitiven Bereich auch die Zeilen die zur analogen Speicherung vorgesehen sind gelöscht werden sollten bevor diese beschrieben werden, da sich auch darin Ladungen von Leckströmen, etc. ansammeln können, welche die Messwerte verfälschen könnten. Das Löschen von unten her nach oben sollte also immer bei jener Speicherzeile begonnen werden, bei welcher kein Messsignal mehr gespeichert ist, also von unten nach oben alle leeren Speicherzeilen erfassen. Durch diese leeren Zeilen wird im Anschluss der aktuelle Messwert bis zur untersten freien Zeile nach unten verschoben.

Alternativ oder zusätzlich kann auch eine Kompensation von parasitären Ladungen durch das erwähnte Mitverschieben von Dunkel-Pixeln und deren Berücksichtigung bei der Auswertung erfolgen.

**Fig. 7** zeigt eine Ausführungsform eines erfindungsgemäßen Positionsgebers 1 mit optischem Sensorelement in einem schematischen Blockschaltbild. Darin treffen abhängig vom Positionscode 9 Photonen p auf den Erfassungsbereichen 10 auf, welche dort in Ladungen 7 gewandelt werden. Diese Ladungen 7 werden, gesteuert durch eine Ansteuerlogik 15a und eine Schaltstruktur 15b und abhängig von einem Triggersignal 20 in die analoge Speicherstruktur 11 verschoben und dort in Speicherzellen, insbesondere in CCD-Potentialtöpfen, gespeichert. Die Ladungen 7 werden von der Schaltstruktur 15b abhängig von einem Auslesesignal 21 in eine Auslesestruktur 12 verschoben von wo sie unter Wandlung in ein elektrisches Datensignal 22 als vom erfassten Positionscode 9 zum Zeitpunkt der zugehörigen Triggerung 20 abhängigen Codewort ausgegeben. Die Ansteuerlogik 15a koordiniert dabei die Abläufe, sodass die belegte Speicherstruktur 11 bei Auslesung 21 in Richtung Auslesestruktur 12 nachgerückt wird und bei Triggerung 20 die Ladungen 7 in der Speicherstruktur 11 in die von der Auslesestruktur 12 gesehen nächste freie Speicherzeile 13 verschoben wird, ohne dabei die belegte Speicherstruktur 11 zu verschieben. Dabei kann vor jeder Verschiebung eine Löschung der jeweiligen Zielzeile erfolgen um allfällig vorhandene, parasitäre Ladungsansammlungen abzuleiten.

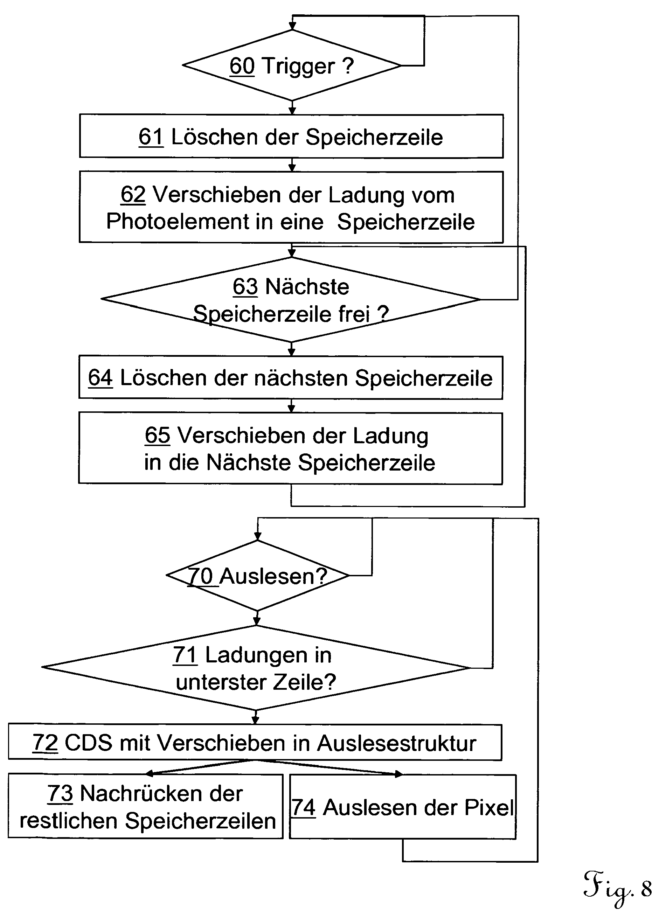

**Fig. 8** stellt ein beispielhaftes Ablaufdiagramm für ein erfindungsgemäße Ausführungsform des Verfahrens zur optischen Erfassung eines Positionscodes dar. Das Verfahren hat zwei zueinander asynchrone, also zeitlich unabhängig voneinander ausführbare, Teile - abgesehen von trivialen Kausalitätsbedingungen und einer Begrenzung durch eine endliche Anzahl von Speicherzeilen.

Der in der oberen Hälfte dargestellte Teil wird durch das in der Abfrage 60 geprüfte Triggersignal ausgelöst. Auf das Triggersignal hin wird im Schritt 61 eine Zeile der Speicherstruktur gelöscht und danach in diese die Ladungen der Photozeile verschoben und dort analog gespeichert. Gegebenenfalls wird vor dem Verschieben noch ein definierte Belichtungszeit abgewartet, in welcher die Ladungen - codeabhängig über die Photozellen verteilt - gesammelt werden. Die Ladungen können, gegebenenfalls nach einem in Schritt 64 dargestellten, jeweils vorherigem Löschen der Zielzeile, wie in Schritt 65 gezeigt in der Speicherstruktur weiter in Richtung Auslesestruktur verschoben werden, insofern die Zielzeile nicht schon durch zuvor gespeicherte Ladungen belegt ist, was die Abfrage 63 überprüft.

Der in der unteren Hälfte dargestellte Teil wird durch ein in der Abfrage 70 geprüftes Lesesignal ausgelöst. Sofern entsprechend der Abfrage 71 gespeicherte Photoladungen in der Speicherstruktur vorhanden sind, werden diese in Schritt 72 in die Auslesestruktur verschoben, welche allenfalls zuvor noch gelöscht wird. Das Verschieben kann unter Anwendung des CDS-Prinzips erfolgen, bzw. kann ein CDS vor dem Verschieben durchgeführt werden. Die Restlichen Zeilen der Speicherstruktur, in welchen ebenfalls Photoladungen von anderen Triggerzeitpunkten gespeichert sind, werden in Schritt 73 entsprechend in Richtung Auslesezeile nachgerückt. In der Auslesezeile erfolgt in Schritt 74 die Auslesung und Umwandlung in ein elektrisches Datensignal welches die Beleuchtungsverhältnisse an der Photozeile zum zugehörigen Triggerzeitpunkt repräsentiert. Das Auslesen der Ausgabezeile kann dabei seriell oder parallel oder in einer Mischform von beidem erfolgen und kann beispielsweise auch ein Verstärken und/oder digitalisieren der Werte umfassen. Das Auslesen 74 kann vor, nach oder zeitlich parallel zum Nachrücken 73 erfolgen.

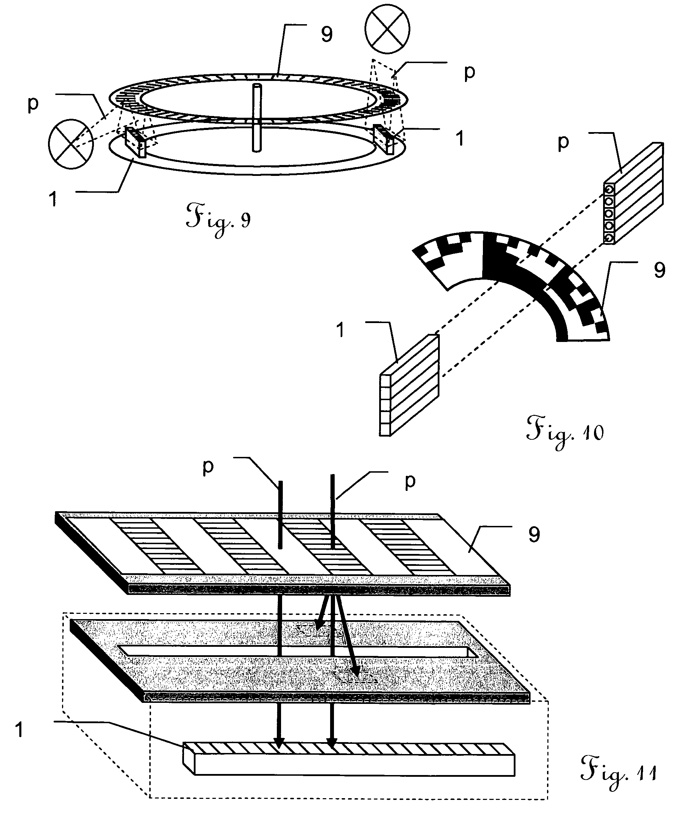

**Fig. 9** zeigt eine Ausführungsform eines erfindungsgemäßen Positionsgebers 1 als Drehlagengeber mit einem Ringförmigen Codeträger der den Positionscode 9 trägt. Im linken Teil der Abbildung wird der Code im Auflichtverfahren mit optischer Strahlung p beaufschlagt, wobei im rechten Teil ein Durchlichtverfahren angewandt wird. Dies stellt zwei alternativen dar, welche üblicherweise nicht gemeinsam in einem Positionsgeber angewandt werden. Sehr wohl aber wird vielfach eine Positionscodeerfassung an mehreren Stellen des Codeträgers durchgeführt um durch Mittelungen, Fehlermodellierungen, etc. die Messgenauigkeit zu verbessern oder Redundanz zu schaffen. Beispielsweise kann durch mehrere Abgriffe eines Rotationscodes entlang dessen Umfangs auch eine dynamische Exzentrizität ermittelt und kompensiert werden, wodurch etwa die Qualitätsanforderungen an die Lager eines solchen Drehlagengebers verringert werden.

**Fig. 10** stelle ein Durchlichtverfahren zur Erfassung eines Positionscodes 9 in einem erfindungsgemäßen Positionsgeber 1 wie zuvor beschrieben dar. Neben der abgebildeten Codierung 9 mit lichtdurchlässigen und Lichtundurchlässigen Flächenbereichen, kann auch ein anderer Code z.B. ein diffraktives Muster oder eine natürliche Textur als Code genutzt werden.

**Fig. 11** zeigt eine beispielhafte Ausführungsform eines erfindungsgemäßen Positionsgebers 1 als linearer Lagegeber.

Ein Teil des Positionscodes 9 wir durch optische Strahlung p vom Geber 1 erfassbar gemacht, sodass die Zeile von photosensitiven Elementen 10 diesen Codebereich lesen kann, im hier gezeigten Beispiel mit einer Durchleuchtung des Positionscodeabschnitts 9. Ausführungsformen des gezeigten, erfindungsgemäßen Positionsgebers 1 wurden zuvor bereits im Detail erläutert.

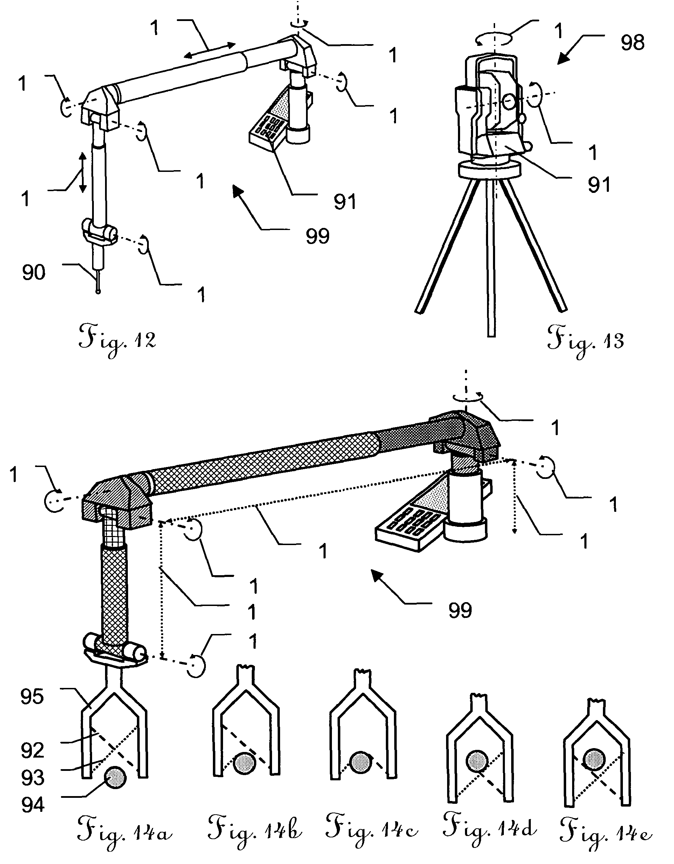

**Fig. 12** zeigt ein Beispiel eines Koordinatenmessgeräts 99 als Articulated Arm, welcher mit einer Touch-Trigger-Probe 90 ausgestattet ist. Im gezeigten Arm sind erfindungsgemäße Linear- und Rotations-Positionsgeber 1 für eine hochgenaue, durch ein Triggersignal der Touch-Probe 1 ausgelöste, Positionswerterfassung verbaut. Insbesondere bei schnellen Bewegungen, bei einem Zittern des Operateurs oder bei Schwingungen der Maschine treten die Triggersignale, welche die Messungen auslösen, in sehr kurzen zeitlichen Abständen, speziell als Bursts von Triggerpulsen auf. Ein erfindungsgemäßer Positionsgeber 1 ist in der Lage, bei solchen Bursts von Triggersignalen zu jedem der Einzelimpulse einen Codewert zu erfassen.

Beispielsweise können auch mit dem Sensor schnelle Mittelwertbildungen gemacht werden. So können etwa in einer anderen Ausführungsform bei einem Gelenkarm mit einer "Touch-Trigger Probe" bei deren Messauslösung an einem Punkt in schneller Zeitlicher Abfolge eine Anzahl von N-Messungen gemacht werden, welche anschließend wiederum von einer Steuereinheit 91 langsamer prozessiert werden können, während der Benutzer den nächsten Messpunkt anzielt. Eine somit mögliche Mittelwertbildung aus den N-Messwerten kann hilfreich sein, um die Genauigkeit der Messung zu steigern oder Fehlmessungen auszuschließen.

**Fig. 13** zeigt ein geodätisches Vermessungsinstrument 98 mit erfindungsgemäßen Positionsgebern 1 zur Bestimmung einer Drehlage einer Zielachse des Geräts um eine Steh- und Kippachse zum Zeitpunkt der Auslösung der Messung. Durch die erfindungsgemäß erzielbare, hohe zeitliche synchronität können Bewegungen zwischen dem erfassen der Positionen im horizontalen und vertikalen ausgeschlossen werden und somit kann eine hohe Konsistenz der vermessenen Raumkoordinaten gewährleistet werden. Selbst dann wenn ein Servomotor für die Achsbewegung nach- oder überschwingt.

**Fig. 14a** zeigt einen beispielhaften Anwendungsfall, von Erfindungsgemäßen Positionsgebern 1 in einem Koordinatenmessgerät 99, speziell in einem Articulated Arm mit einem Messkopf 95 zur Ermittlung von Rohrdurchmessern. Dabei werden die Positionsinformationen der Winkel- und/oder Lineargeber 1 des Arms bei jedem Triggersignal erfasst. Die Messung wird dabei meist händisch durchgeführt, indem der Benutzer den gabelförmigen Messkopf 95 über das zu vermessende Rohr 94 führt. Alternativ kann diese Bewegung jedoch auch maschinell, mit einem motorisierten Koordinatenmessgerät 99 durchgeführt werden.

Die eigentliche Messung läuft - wie in **Fig. 14a** bis **Fig. 14e** illustriert - derart ab, dass zu jenem Zeitpunkt, bei welchem der Lichtstrahl 92, 93 vom Prüfling 94 unterbrochen bzw. wiederhergestellt wird, ein Triggersignal ausgelöst wird, welches die Bestimmung der Winkel- und/oder Längenmesswerte auslöst.

In **Fig. 14a** ist kein Strahl 92,93 unterbrochen. Wird die Messgabel 95 nunmehr über das Rohr 94 abgesenkt, so wird der erste - punktiert dargestellte - Lichtstrahl 93 durchbrochen, sodass ein erstes Triggersignal ausgelöst wird, was in **Fig. 14b** gezeigt ist. Beim weiteren Eintauchen des Rohrs 94 in die Gabel 95 wird, wie in Fig. 14c gezeigt, auch der zweite - gestrichelt dargestellte - Lichtstrahl 92 unterbrochen, sodass ein zweites Triggersignal ausgelöst wird. Das Auslösen des dritten Triggersignals wird in **Fig. 14d** gezeigt, welches durch das freigeben des ersten Lichtstrahls 93 der Lichtschranke verursacht wird. In **Fig. 14e** wird nunmehr bei weiterer Bewegung der Gabel 95 über das Rohr 94 auch der zweite Lichtstrahl 92 wieder freigegeben, was das vierte Triggersignal auslöst.

Anhand der jeweils zu den vier Triggerzeitpunkten ausgelösten Messwerterfassungen in den erfindungsgemäßen Positionsgebern 1 des Koordinatenmessgeräts 99 kann nunmehr der Rohrdurchmesser ermittelt werden. In der gezeigten Anwendung einer Rohrvermessung folgen beispielsweise bei einer zentrischen Bewegung der Gabel 95 über das Rohr 94 die Triggersignale des Rechten 93 und linken 92 Sensors in sehr kurzer zeitlicher Abfolge. Dadurch sind im Stand der Technik entsprechend kurze Messzeiten erforderlich, welche schnelle und meist auch teure Elektronik erfordern. Zudem erzeugt eine schnelle Elektronik auch viel Verlustwärme was z.B. wegen der dabei auftretenden Temperaturänderungen und damit verbundenen Temperaturausdehnungen die erzielbare Genauigkeit beeinträchtigt.

Erfindungsgemäß wird nunmehr im lichtempfindlichen Sensor der Positionsgeber 1 selber (also z.B. im CCD- oder CMOS-Array) der erfasste Positionscode temporär analog gespeichert, was in kurzer Zeit und mit geringem Energieaufwand möglich ist. Anschließend kann die analog gespeicherte Information - auch mit einer langsameren Geschwindigkeit ausgelesen werden. Das Auslesen kann also durchaus längere Zeit in Anspruch nehmen als die Zeit zwischen zwei Triggersignalen. Beispielsweise kann das Auslesen und Verarbeiten, welches beispielsweise mit einer Austaktung der Analogwerte, Analog/Digital-Wandlung und einer Positionsberechnung verbunden ist, auch länger dauern als jene Zeit zwischen zwei Auslösungen des Triggersignals.

Die analog gespeicherten Werte der Erfassungsbereiche können dabei neben einer seriellen Austaktung auch parallel digitalisiert werden, und gegebenenfalls auch nochmals digital auf dem Sensor zwischengepuffert werden. Auch kann eine direkte Auswertung der erfassten Positionscodes (oder eine Vorverarbeitung hierzu) auf dem Sensor ausgeführt werden.

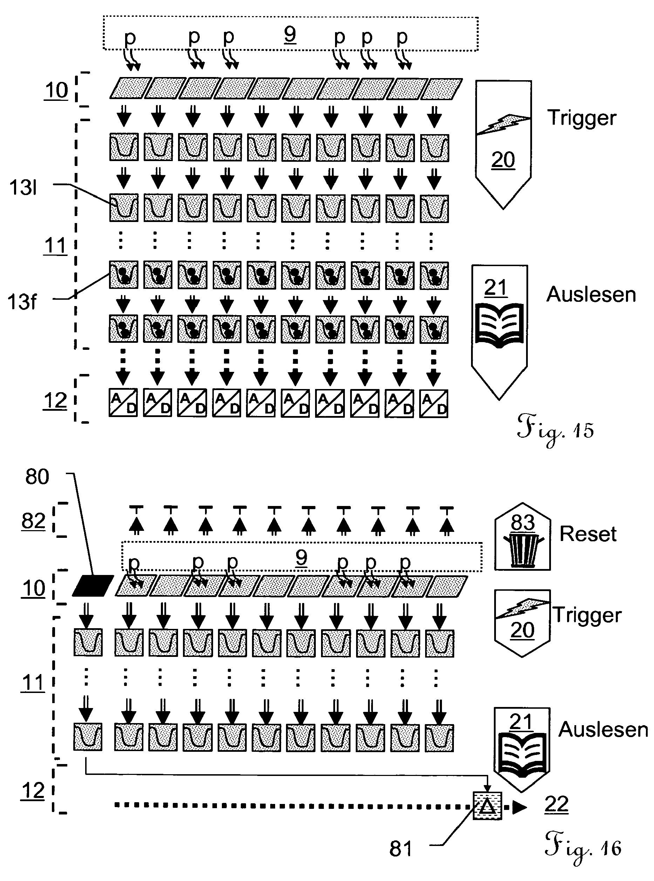

**Fig. 15** zeigt eine Ausführungsform mit einer photoempfindlichen Zeile 10, beispielsweise ausgeführt als eine Zeile von backside-illuminated Photodioden, auf welche eine Analoge CCD-Speicherstruktur 11 folgt, in welcher Ladungen in eine Verschieberichtung in Richtung Auslesestruktur 12 verschoben werden können. Das Verschieben wird durch ein Triggersignal 20 ausgelöst und die Ladungen werden bis zur untersten der unbelegten Speicherzeilen 131 verschoben. Die belegten Speicherzeilen 13f werden basierend auf einem Auslesesignal 21 in Richtung Auslesestruktur 12 verschoben. In der hier dargestellten Ausführungsform ist diese als eine parallele Auswertung der gesamten Zeile ausgeführt, beispielsweise in CMOS-Technologie mit CCD-Struktur.

In der Ausführungsform von **Fig. 16** ist neben der photosensitiven Zeile 10 ein Dunkelpixel 80 dargestellt in welchem keine Photoladungen sondern lediglich parasitäre Ladungen gesammelt werden, welche dann, insbesondere beim Auslesen, als Dunkelreferenz von den Pixel-Messwerten subtrahiert werden können. In praktischen Ausführungen können auch mehrere solche Dunkelpixel 80 angewandt werden, etwa um eine Mittelung des Dunkelwertes zu erzielen. Die Dunkelwert-Subtraktion kann analog, z.B. beim Verschieben in die Auslesestruktur 12, oder digital, also nach erfolgter Auslesung durchgeführt werden. In der Darstellung ist bei der Auslesestruktur 12 eine CDS-Schaltung 81 gezeigt, welche den Dunkelwert des Dunkelpixels 80 nutzt. In dieser Ausführungsform ist über der Photozeile 10 eine Löschstruktur 82 dargestellt mit welcher bei Abwesenheit eines Triggersignals 20 die Ladungen aus den Photozellen abgeleitet werden. Erst zum Triggerzeitpunkt werden die Photoladungen gesammelt und Anschließend wie schon beschrieben in die Speicherstruktur 11 verschoben. Das Auslesen erfolgt durch ein vom Triggersignal 20 unabhängig auslösbares Auslesesignal 21. Triggerung 20 und Auslösung 21 können also asynchron zueinander ausgeführt werden (Abgesehen von Trivialbedingungen wie etwa, dass ein Auslesen vor der Triggerung nicht möglich ist, dass bei Triggerung zumindest eine der Speicherzeilen frei sein muss um keinen Datenverlust zu erhalten, etc.).

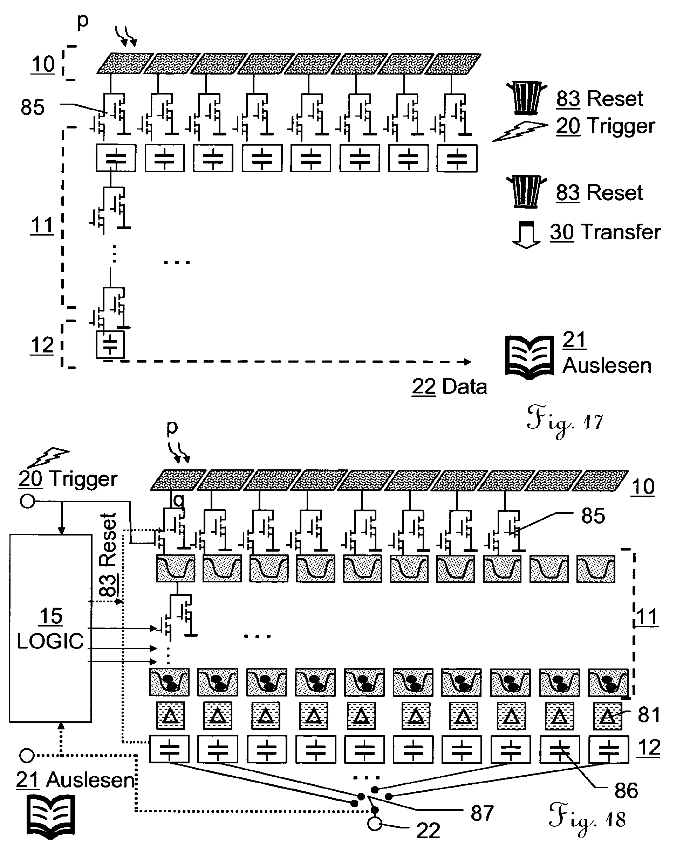

**Fig. 17** illustriert eine Ausführungsform, in welcher die analoge Speicherstruktur 11 statt als CCD-Struktur als Kondensatoren-Struktur in CMOS-Technologie ausgeführt ist. Dabei ist wie bei den analogen CCD-Speichern bei jeder der Speicherzeilen eine symbolisch angedeutete Schaltstruktur 85 zur zeilenweisen Verschiebung 30 oder Löschung 83 von Ladungen vorgesehen. Die unterste Zeile ist als Auslesestruktur 12 implementiert, welche mit einem zeitlich zur Auslösung unabhängigen Auslesesignal 21 ansteuerbar ist.

In einer anderen Ausführungsform kann im Anschluss an die (also in Verschieberichtung 30 nach der) analoge CCD-Speicher die Auslesestruktur 12 statt als Schieberegister in CCD-Technologie auch als eine Zeile von Kondensatoren ausgebildet sein, in welcher die Ladungen zur Auswertung verschoben werden. Diese Kondensatoren können entweder parallel (durch jeweils einen ADC per Kondensator) oder sequenziell (durch eine Multiplexerschaltung auf einen oder mehrere ADCs) auswertet werden. Somit ist die unterste CCD-Zeile während des Auslesevorgangs frei für eine darauf folgende Messung.

In einer solchen anderen Ausführungsform kann mit der Verschiebung der Ladungen von den analogen Speichern 11 der CCD-Struktur in die Kondensatoren der Auslesestruktur 12 auch das zuvor beschriebene Correlated Double Sampling 81 zur Anwendung gebracht werden. Je nach Implementierung kann das CDS 81 dabei parallel für die ganze Zeile oder seriell durchgeführt werden. Neben einem analogen CDS 81 kann auch eine digitale Variante des CDS ausgeführt werden indem zumindest ein Referenzwert des CDS ebenfalls digitalisiert und dann numerisch bei der Auswertung der digitalen Pixelwerte berücksichtigt, also beispielsweise subtrahiert wird.

In der in **Fig. 18** gezeigten Ausführungsform kann beispielsweise die Auslesestruktur 12 als eine Zeile von Kondensatoren 86 ausgebildet sein, welche mit einer Multiplexer-Struktur 87 an einem Ausgang zur Verstärkung und/oder A/D-Wandlung als Datensignal 22 bereitgestellt werden. Dieses Auslesen erfolgt über ein oder mehrere Auslesesignale 21, welche den Auslesevorgang steuern. Die Kondensatoren werden zu Beginn jedes Auslesevorgangs über eine CDS-Struktur 81 mit den Ladungen aus der untersten Zeile der analogen CCD-Speicherstruktur 11 beaufschlagt. Das CDS 81 kann dabei parallel für die gesamte Zeile durchgeführt werden. Die Kondensatoren 86 können vor der Übertragung der Ladungen aus dem CCD noch aktiv gelöscht, also von allfälligen parasitären Ladungen befreit werden, etwa durch ein Ableiten der Ladungen hin zu einem tieferen Potential.

Die analoge CCD-Speicher-Struktur 11 ist dabei derart ausgebildet, dass mit dieser ein zeilenweises Verschieben der Photoladungen p nach unten durchführbar ist, wobei insbesondere nicht nur die gesamte Speicherstruktur 11 verschiebbar ist, sondern nur bis in die unterste freie Speicherzeile verschoben wird und schon von zuvor erfassten Photoladungen belegte, weiter unter liegende Zeilen nicht mitverschoben werden. Zudem ist jede der Zeilen individuell löschbar. Es kann neben der individuellen Löschung auch eine entsprechende Ansteuerung zum Löschen der gesamten CCD-Struktur 11 vorgesehen sein. Diese Funktionalität ist durch die dargestellte Schaltstruktur 85 von einer Zeile zur nächsten oder nach Masse symbolisiert. Die dargestellte Schaltstruktur 85 hat dabei symbolischen Charakter und stellt nicht zwingend eine praktische Implementierung der tatsächlichen Halbleiterstruktur für diese Funktionalitäten dar, welche für sich genommen ja aus dem Stand der Technik bekannt sind.

Die Ansteuerung der Verschiebungen und Löschungen erfolgt über eine Ansteuerlogik 15. Diese hat die primäre Aufgabe bei einem Triggersignal 20 die Ladungen der Photozeile 10 Zeilenweise in die CCD-Struktur 11 und dort in die unterste freie Zeile zu verschieben. Dabei kann vor jeder Verschiebung ein Löschen der Zielzeile oder Zielzeilen erfolgen. Bei Auslösung eines Lesevorgangs durch das Lesesignal 21 werden die Ladungen (ev. unter Anwendung von CDS) in die Auslesestruktur 12 verschoben und von dort ausgegeben, beispielsweise zu einem full-pipelined ADC. Dabei werden alle Speicherzeilen, in welchen sich Photoladungen befinden entsprechend nach unten Nachgerückt, wobei die Zielzeilen der Nachrückung entsprechend ebenfalls zuvor gelöscht werden können. Dies erfordert eine selektive, zeilenweise Verschiebe und/oder Löschfunktionalität der CCD-Speicherstruktur 11, welche beispielsweise bei klassischen Frame-Transfer CCDs nicht gegeben ist. Das Triggersignal 20 und das Auslesesignal 21 können dabei unabhängig voneinander, insbesondere zeitlich asynchron zueinander erfolgen.

Es können mit entsprechend komplexeren Verbindungen und Schaltwerken die Speicherzeilen neben dem oben beschriebenen FIFO-Prinzip (First In - First Out) auch als Random-Access-Speicher verwendet werden. Beispielsweise können die Ladungen der Photozeile 10 auf direktem Wege wahlweise in eine von mehreren Speicherzeilen verschoben werden und/oder diese wahlweise in die Auslesestruktur verschoben werden. Eine entsprechende Speicherverwaltungslogik trägt dafür sorge, dass Photoladungen jeweils in freie Speicherzeilen abgelegt werden (und diese gegebenenfalls zuvor gelöscht werden) und dass beim Auslesen eine gewünschte Reihenfolge eingehalten wird, beispielsweise jene der Triggerung. Dies bietet sich insbesondere an, wenn die Speicherstrukturen 11 auf dem Halbleiter kleiner sind als die photoempfindliche Fläche 10 und entsprechend mehrere Speicherzellen unter einer Photozelle platz finden.

Insbesondere, wenn beispielsweise durch eine oben erwähnte aktive Beleuchtungssteuerung, also etwa durch Ausschalten der Beleuchtung zwischen den Trigger-Events die Generierung von Photoladungen verhindert (bzw. bis auf einen allfälligen Dunkelstrom reduziert) wird, kann ein Ansammeln und Überlaufen von Photo-Ladungen im Photoelement zwischen zwei Triggerungen verhindert werden. Hierbei kann ein differenzielles Auswerten ähnlich des CDS-Prinzips zur Verbesserung der Messwerte beitragen.

## Patentansprüche

1. Positionsgeber (1) mit einem Positionscode (9) und einem optischen Sensorelement zur Erfassung zumindest eines Teils des Positionscodes (9), wobei das Sensorelement aufweist:
• eine Zeile (10) von photosensitiven Erfassungsbereichen (16), welche auftreffende Photonen (p) in elektrische Ladungen (7) wandeln,
• eine Auslesestruktur (12) zur Ausgabe eines elektrischen Datensignals (22) entsprechend der elektrischen Ladungen (7),
**dadurch gekennzeichnet, dass**
das Sensorelement zur temporären Speicherung der elektrischen Ladungen (7)
eine analoge Speicherstruktur (11) mit einer Anzahl von N > 1 Zeilen (13) photounempfindlicher analoger Speicherzellen (14), wobei die Anzahl der Zeilen (13) von Speicherzellen (14) größer als jene der Erfassungsbereiche (16) ist, insbesondere ein vielfaches davon, sowie
eine elektrische Schaltstruktur (15) aufweist, mit welcher Schaltstruktur (15) zwischen den Erfassungsbereichen (16), den Speicherzellen (14) und der Auslesestruktur (12) ein Ladungstransfer durchführbar ist.

2. Positionsgeber nach Anspruch 1, wobei
die elektrische Schaltstruktur (15) derart ausgebildet ist, dass der Ladungstransfer zwischen den Zeilen (13) von Speicherzellen (14) für einzelne Zeilen (13) oder einem Subset der Zeilen (13) der Speicherstruktur (11) durchführbar ist, insbesondere wobei ein oberer Teil der Zeilen (13) der Speicherstruktur (11) unabhängig von einem unteren Teil der Zeilen (13) der Speicherstruktur (11) verschiebbar ist.

3. Positionsgeber nach Anspruch 1 oder 2, wobei
die Schaltstruktur (15) derart ausgebildet ist, dass
• durch ein Auslösesignal (20) ein Zeitpunkt eines Erfassens des Positionscodes (9) und Transferierens der Ladungen (7) von den Erfassungsbereichen (16) in die Speicherstruktur (11) festlegbar ist, und
• durch ein zum Auslösesignal (20) asynchrones, insbesondere zeitlich unabhängiges, Auslesesignal (21) ein Zeitpunkt der Ausgabe durch die Auslesestruktur (12) festlegbar ist.

4. Positionsgeber nach einem der Ansprüche 1 bis 3, wobei
das Sensorelement
▪ eine einzige Zeile (10) von photosensitiven Erfassungsbereichen (16) und
▪ zumindest N ≥ 3, insbesondere N ≥ 4, Zeilen (13) von Speicherzellen (14) und
▪ insbesondere eine einzige Auslesestruktur (12), aufweist.

5. Positionsgeber nach einem der Ansprüche 1 bis 4, wobei
mit der Schaltstruktur (15) der Transfer der elektrischen Ladungen (7)
• zwischen der Zeile (10) von Erfassungsbereichen (16) und einer der Zeilen analoger Speicherzellen (14), insbesondere zu einem durch das Auslösesignal (20) vorgegebenen Erfassungszeitpunkt,
• zwischen den Zeilen (13) analoger Speicherzellen (14) untereinander, insbesondere wobei der Transfer für jede dieser Zeilen (13) von Speicherzellen (14) selektiv ansteuerbar ist oder speziell für eine echte Teilmenge der Zeilen (13) von Speicherzellen (14) ansteuerbar ist, und
• zwischen zumindest einer der Zeilen (13) analoger Speicherzellen (14) und der Auslesestruktur (12), insbesondere durch das Auslesesignal (21) zur Auslesung des zum Erfassungszeitpunkt erfassten Positionscodes (9),
durchführbar ist,
wobei zwischen einer ersten Erfassung und Abschluss einer zugehörigen ersten Auslesung der ersten Erfassung zumindest eine zweite Erfassung durchführbar ist, deren Ladungen (7) in der Speicherstruktur (11) temporär analog gespeichert werden und welche zu einem späteren Zeitpunkt in einer zumindest zweiten, auf die erste folgenden, Auslesung auslesbar ist.

6. Positionsgebe nach einem der Ansprüche 1 bis 5, wobei
das Sensorelement eine Ableitstruktur (83,42) aufweist, welche derart ausgebildet ist, dass allenfalls in einer der analogen Speicherzellen (14) vorhandene Ladungen (7) abgeleitet werden, bevor ein Ladungstransfer in diese Speicherzellen (14) erfolgt, insbesondere wobei die Ableitstruktur (83,42) selektiv auf eine Teilmenge der Anzahl N der Zeilen der analogen Speicherstruktur (11), speziell auf einzelne Zeilen (13) der Speicherstruktur (11), anwendbar ist.

7. Positionsgeber nach einem der Ansprüche 1 bis 6, wobei
die Speicherstruktur (11) eine Speicherverwaltung aufweist, welche anhand des Auslösesignals (20) und des Auslesesignals (21) den Ladungstransfer steuert und derart ausgebildet ist, dass
▪ Anhand des Auslesesignals (21) ein Transferieren der Ladungen in der Speicherstruktur (11) in Richtung der Auslesestruktur (12) und die Ausgabe des Datensignals (22) anhand der analogen Speicherwerte in der Auslesestruktur (12) erfolgt und
▪ Anhand des Auslösesignals (20) ein Transferieren der Ladungen (7) aus den Erfassungsbereichen (16) in die Speicherstruktur (11), speziell in eine der Auslesestruktur (12) am nächsten liegende Zeile (13) der Speicherstruktur (11) in welcher noch keine Ladungen (7) gespeichert sind, durchführbar ist, insbesondere wobei die Ausgabe asynchron zur Auslösung erfolgt.

8. Positionsgeber nach einem der Ansprüche 1 bis 7, wobei
das Sensorelement mit einer CCD mit CMOS-Struktur auf einem gemeinsamen Halbleitersubstrat aufgebaut ist, insbesondere wobei die Speicherstruktur (11) als CCD-Technologie und die Auslesestruktur (12) als CMOS-Technologie ausgeführt sind, und/oder das Sensorelement mit einer Correlated Double Sampling Struktur (81) ausgeführt ist, insbesondere in jener Zeile der Speicherstruktur (11), aus welcher der Transfer in die Auslesestruktur (12) erfolgt.

9. Positionsgeber nach einem der Ansprüche 1 bis 8, wobei
die Zeile von Erfassungsbereichen (16) zumindest ein Dunkelpixel (80) aufweist, welches von auftreffenden Photonen (p) geschützt ist und in welchem keine Ladungen (7) durch Photonen generiert werden und dessen Ladungen beim zeilenweisen Transfer als Dunkelreferenz mittransferiert werden.

10. Verfahren zur optischen Erfassung zumindest eines Teils eines Positionscodes (9) durch eine Zeile von photosensitiven Erfassungselementen (16) mit
▪ einem Erfassen und Umwandeln von Photonen in elektrische Ladungen (7) in den Erfassungselementen (16),
▪ einem - durch ein Auslesesignal (21) ausgelöstes - Ausgeben eines den elektrischen Ladungen entsprechenden elektrischen Datensignals (22),
▪ ein Triggern eines Zeitpunktes der optischen Erfassung durch ein externes Auslösesignal (20) und ein dadurch ausgelöstes Transferieren der elektrischen Ladungen (7) aus den Erfassungselementen (16) in eine
Speicherstruktur (11) mit N > 1 Zeilen (13) von analogen Speicherzellen (14), wobei die Anzahl der Zeilen (13) in der Speicherstruktur (11) größer ist als jene der Erfassungselemente (16), insbesondere ein vielfaches davon, und
▪ einem temporären Zwischenspeichern der analogen Ladungen (7) in dieser Speicherstruktur (11) vor dem Ausgeben, wobei durch das Zwischenspeichern das Erfassen gegenüber dem Ausgeben asynchron ausführbar ist.

11. Verfahren nach Anspruch 10, wobei
beim temporären Zwischenspeichern das Transferieren in der Speicherstruktur (11) auf einzelnen Zeilen (13) oder auf ein Subset der Zeilen (13) der Speicherstruktur (11) selektiv durchgeführt wird, insbesondere wobei ein oberer Teil der Zeilen (13) der Speicherstruktur (11) unabhängig von einem unteren Teil der Zeilen (13) der Speicherstruktur (11) verschiebbar ist.

12. Verfahren nach Anspruch 10 oder 11, wobei mittels einer Schaltstruktur (15),
▪ bedingt durch ein Auslösesignal (20)
▪ ein Transferieren der Ladungen (7) aus der Zeile (10) von photosensitiven Erfassungsbereichen (16) in eine der Zeilen der analogen Speicherstruktur (11)
durchgeführt wird und
▪ bedingt durch ein Auslesesignal (21)
▪ ein Transferieren von Ladungen (7) aus einer der Zeilen (13) der analogen Speicherstruktur (11) in eine Auslesestruktur (12), insbesondere mit einem Nachrücken zumindest jener Zeilen (13) der Speicherstruktur (11) in welchen erfasste Ladungen (7) zwischengespeichert sind, und
▪ die Ausgabe des elektrischen Datensignals (22) aus der Auslesestruktur (12)
durchgeführt wird,
insbesondere wobei das Auslesesignal (21) zeitlich unabhängig vom Auslösesignal (20) steuerbar ist.

13. Verfahren nach einem der Ansprüche 10 bis 12, wobei
die Speicherstruktur (11) als zeilenweises Schieberegister, insbesondere nach einem First-In First-Out Prinzip, verwaltet wird,
insbesondere wobei ein selektives Löschen einer Teilmenge der Zeilen (13) der Speicherstruktur (11) durchführbar ist, speziell wobei das selektive Löschen einer der Zeilen (13) vor dem Transferieren von Ladungen (7) in diese Zeile (13) stattfindet,und/oder wobei
▪ abhängig vom Auslösesignal (20) die Ladungen (7) von den Erfassungsbereichen (16) entweder in einer Ableitstruktur (83,42) abgeleitet oder
▪ in der analogen Speicherstruktur (11) gespeichert werden,
insbesondere wobei die Ladungen (7) in der Speicherstruktur (11) in jene unbelegte Zeile (131) transferiert werden, welche der Auslesestruktur (12) am nächsten liegt.

14. Verfahren nach einem der Ansprüche 10 bis 13, wobei
Ausgelöst durch das Auslösesignal (20),
▪ ein Transferieren von sich zuvor angesammelten parasitären Ladungen (7) aus den Erfassungsbereichen (16) in eine erste Zeile (13) der Speicherstruktur (11), welche als codeinformationslose Trash-Zeile (tr0,tr1,tr2,tr3) genutzt wird, gefolgt von
▪ einem Erfassen von Photonen (7) zur Ermittlung des Positionscodes (9) und
▪ ein Transferieren der erfassten Ladungen aus den Erfassungsbereichen (16) in eine zweite Zeile (13) der Speicherstruktur (13), welche als Mess-Zeile (m0,m1,m2,m3) mit Codeinformation genutzt wird, insbesondere wobei die Ladungen (7) der Trash-Zeile (tr0,tr1,tr2,tr3) zur Ableitung in eine Ableitstruktur (83,42) und jene der Mess-Zeilen (m0,m1,m2,m3) zur Ausgabe in die Auslesestruktur (12) transferiert werden.

15. Computerprogrammprodukt mit Programmcode, der auf einem maschinenlesbaren Träger gespeichert ist, als Festverdrahtete Logik ausgeführt ist oder als Computer-Daten-Signal, verkörpert durch eine elektromagnetische Welle, zur Durchführung des Verfahrens nach einem der Ansprüche 10 bis 14, insbesondere wobei der Programmcode ein Ansteuern eines Ladungstransfers in einem Positionsgeber (1) nach einem der Ansprüche 1 bis 9 durchführt, vorzugsweise wenn der Programmcode in einer Auswerteeinheit (4) eines Positionsgebers (1) nach einem der Ansprüche 1 bis 9 und/oder in einer hiermit verbundenen Auswerteschaltung ausgeführt wird.

## Claims

1. A position encoder (1), comprising a position code (9) and an optical sensor element for acquiring at least part of the position code (9), wherein the sensor element comprises:
• a line (10) of photosensitive acquisition regions (16), which convert incident photons (p) into electric charges (7),
• a readout structure (12) for outputting an electric data signal (22) corresponding to the electric charges (7),
**characterized in that**
the sensor element, for the purposes of temporarily storing the electric charges (7), comprises
an analog memory structure (11) with a number of N > 1 lines (13) of photo-insensitive analog memory cells (14), wherein the number of lines (13) of memory cells (14) is greater than, in particular a multiple of, the number of acquisition regions (16), and
an electrical switching structure (15), by means of which switching structure (15) a charge transfer is performable between the acquisition regions (16), the memory cells (14) and the readout structure (12).

2. The position encoder as claimed in claim 1, wherein the electrical switching structure (15) is embodied in such a way that the charge transfer between the lines (13) of memory cells (14) is performable for individual lines (13) or for a subset of the lines (13) in the memory structure (11), in particular wherein an upper part of the lines (13) in the memory structure (11) is shiftable independently of a lower part of the lines (13) in the memory structure (11).

3. The position encoder as claimed in claim 1 or 2, wherein the switching structure (15) is embodied in such a way that
• a trigger signal (20) renders it possible to set a time of acquisition of the position code (9) and of transferring the charges (7) from the acquisition regions (16) into the memory structure (11), and
• a readout signal (21) asynchronous to, in particular time-independent of, the trigger signal (20) renders it possible to set a time of the output by the readout structure (12).

4. The position encoder as claimed in any one of claims 1 to 3,
wherein the sensor element comprises
• a single line (10) of photosensitive acquisition regions (16) and
• at least N ≥ 3, in particular N ≥ 4, lines (13) of memory cells (14) and,
• in particular, a single readout structure (12).

5. The position encoder as claimed in any one of claims 1 to 4,
wherein the switching structure (15) renders possible performing the transfer of the electric charges (7)
• between the line (10) of acquisition regions (16) and one of the lines of analog memory cells (14), in particular at an acquisition time predetermined by the trigger signal (20),
• between the lines (13) of analog memory cells (14) amongst themselves, in particular wherein the transfer is selectively actuatable for each one of these lines (13) of memory cells (14) or, specifically, actuatable for a proper subset of the lines (13) of memory cells (14), and
• between at least one of the lines (13) of analog memory cells (14) and the readout structure (12), in particular by the readout signal (21) for reading out the position code (9) acquired at the acquisition time,
wherein at least a second acquisition is performable between a first acquisition and completion of an associated first readout of the first acquisition, the charges (7) of which second acquisition are temporarily stored in the memory structure (11) in analog manner and which can be read out at a later time in an at least second readout following the first readout.

6. The position encoder as claimed in any one of claims 1 to 5,
wherein the sensor element comprises a discharge structure (83, 42), which is embodied in such a way that charges (7) possibly present in one of the analog memory cells (14) are discharged before there is a charge transfer into these memory cells (14), in particular wherein the discharge structure (83, 42) is selectively applicable to a subset of the number N of lines of the analog memory structure (11), specifically to individual lines (13) of the memory structure (11).

7. The position encoder as claimed in any one of claims 1 to 6,
wherein the memory structure (11) comprises a memory manager, which controls the charge transfer on the basis of the trigger signal (20) and of the readout signal (21) and which is embodied in such a way that
• on the basis of the readout signal (21), a transfer of the charges in the memory structure (11) in the direction of the readout structure (12) and the output of the data signal (22) in the readout structure (12) on the basis of the analog memory values take place and
• on the basis of the trigger signal (20), it is possible to perform a transfer of the charges (7) from the acquisition regions (16) into the memory structure (11), specifically into a line (13) in the memory structure (11), which lies closest to the readout structure (12) and in which no charges (7) are stored yet, in particular wherein the output is effected asynchronously in relation to the trigger.

8. The position encoder as claimed in any one of claims 1 to 7,
wherein the sensor element is installed with a CCD with a CMOS structure on a common semiconductor substrate, in particular wherein the memory structure (11) is embodied in CCD technology and the readout structure (12) is embodied in CMOS technology, and/or
the sensor element is embodied with a correlated double sampling structure (81), in particular in that line of the memory structure (11) from which the transfer into the readout structure (12) is effected.

9. The position encoder as claimed in any one of claims 1 to 8,
wherein the line of acquisition regions (16) comprises at least one dark pixel (80), which is protected against incident photons (p) and in which no charges (7) are generated by photons and the charges of which are also transferred during the line-by-line transfer as a dark reference.

10. A method for optical acquisition of at least part of a position code (9) by a line of photosensitive acquisition elements (16), comprising
▪ an acquisition and conversion of photons into electric charges (7) in the acquisition elements (16),
▪ an output - triggered by a readout signal (21) - of an electric data signal (22) corresponding to the electric charges,
▪ triggering a time of the optical acquisition by an external trigger signal (20) and, triggered thereby, transferring the electric charges (7) from the acquisition elements (16) into a memory structure (11) with N > 1 lines (13) of analog memory cells (14), wherein the number of lines (13) in the memory structure (11) is greater than, in particular a multiple of, the number of acquisition elements (16), and
▪ temporary buffer storing of the analog charges (7) in this memory structure (11) prior to the output,
wherein, as a result of the buffer storing, the acquisition can be effected asynchronously in relation to the output.

11. The method as claimed in claim 10,
wherein during the temporary buffer storing the transfer in the memory structure (11) to individual lines (13) or to a subset of the lines (13) in the memory structure (11) is performed selectively, in particular wherein an upper part of the lines (13) in the memory structure (11) is shiftable independently of a lower part of the lines (13) in the memory structure (11)

12. The method as claimed in claim 10 or 11,
wherein a switching structure (15) is used to perform,
▪ caused by a trigger signal (20),
▪ a transfer of charges (7) from the line (10) of photosensitive acquisition regions (16) into one of the lines of the analog memory structure (11)
and,
▪ caused by a readout signal (21),
▪ a transfer of charges (7) from one of the lines (13) in the analog memory structure (11) into a readout structure (12), in particular with an advance of at least those lines (13) in the memory structure (11) in which acquired charges (7) are buffer stored and
▪ the output of the electric data signal (22) from the readout structure (12) are performed,
in particular wherein the readout signal (21) is controllable in a time-independent manner from the trigger signal (20).

13. The method as claimed in any one of claims 10 to 12,
wherein the memory structure (11) is managed as line-by-line shift register, in particular according to a first in, first out principle, in particular wherein selective erasing of a subset of the lines (13) in the memory structure (11) is performable, specifically wherein there is selective erasing of one of the lines (13) prior to the transfer of charges (7) into this line (13), and/or
depending on the trigger signal (20), the charges (7) from the acquisition regions (16) are either
▪ discharged in a discharge structure (83, 42) or
▪ stored in the analog memory structure (11),
in particular wherein the charges (7) in the memory structure (11) are transferred into that unoccupied line (131) lying closest to the readout structure (12).

14. The method as claimed in any one of claims 10 to 13,
wherein, triggered by the trigger signal (20),
▪ a transfer of previously collected parasitic charges (7) from the acquisition regions (16) into a first line (13) in the memory structure (11), which is used as code information-free trash line (tr0, tr1, tr2, tr3), followed by
▪ an acquisition of photons (7) for establishing the position code (9) and
▪ a transfer of the acquired charges from the acquisition regions (16) into a second line (13) in the memory structure (13), which is used as measurement line (m0, m1, m2, m3) with code information, in particular wherein the charges (7) in the trash line (tr0, tr1, tr2, tr3) are transferred into a discharge structure (83, 42) for discharge and those in the measurement lines (m0, m1, m2, m3) are transferred into the readout structure (12) for output.

15. A computer program product with program code stored on a machine-readable medium, embodied as hardwired programmable logic controller or as a computer data signal embodied by an electromagnetic wave, for performing the method as claimed in any one of claims 10 to 14, in particular wherein the program code performs an actuation of a charge transfer in a position encoder (1) as claimed in any one of claims 1 to 9, preferably when the program code is executed in an evaluation unit (4) of a position encoder (1) as claimed in any one of claims 1 to 9 and/or in an evaluation circuit connected therewith.

## Revendications

1. Indicateur de position (1) avec un code de position (9) et un élément détecteur optique pour la détection d'au moins une partie du code de position (9), cependant que l'élément détecteur présente :
• une ligne (10) de zones de détection photosensibles (16) qui transforment des photons incidents (p) en charges électriques (7),
• une structure de lecture (12) pour sortir un signal de données électrique (22) selon les charges électriques (7),
**caractérisé en ce que** l'élément détecteur pour la mémorisation temporaire des charges électriques (7) présente une structure de mémorisation analogique (11) avec un nombre de N > 1 lignes (13) de cellules de mémoire analogiques qui ne sont pas photosensibles (14), cependant que le nombre de lignes (13) des cellules de mémoire (14) est plus grand que celui des zones de détection (16), en particulier est un multiple de celui-ci, ainsi qu'une structure de commutation électrique (15) avec laquelle un transfert de charge peut être effectué entre les zones de détection (16), les cellules de mémoire (14) et la structure de lecture (12).

2. Indicateur de position selon la revendication 1, cependant que la structure de commutation électrique (15) est configurée telle que le transfert de charge entre les lignes (13) de cellules de mémoire (14) peut être effectué pour des lignes individuelles (13) ou entre un sous-ensemble des lignes (13) de la structure de mémorisation (11), en particulier cependant qu'une partie supérieure des lignes (13) de la structure de mémorisation (11) est déplaçable indépendamment d'une partie inférieure des lignes (13) de la structure de mémorisation (11).

3. Indicateur de position selon la revendication 1 ou 2, cependant que la structure de commutation (15) est configurée telle que
• par un signal de déclenchement (20) un moment d'une détection du code de position (9) et du transfert des charges (7) des zones de détection (16) dans la structure de mémorisation (11) peut être fixé et
• par un signal de lecture (21) asynchrone par rapport au signal de déclenchement (20), en particulier indépendant dans le temps, un moment de la lecture peut être fixé par la structure de lecture (12).

4. Indicateur de position selon l'une des revendications 1 à 3, cependant que l'élément détecteur présente
• une seule ligne (10) de zones de détection photosensibles (16) et
• au moins N ≥ 3, en particulier N ≥ 4, lignes (13) de lignes de mémoire (14) et
• en particulier une seule structure de lecture (12).

5. Indicateur de position selon l'une des revendications 1 à 4, cependant qu'avec la structure de commutation (15) le transfert des charges électriques (7) peut être effectué
• entre la ligne (10) de zones de détection (16) et l'une des lignes de cellules de mémoire analogiques (14), en particulier à un moment de détection prédéfini par le signal de déclenchement (20),
• entre les lignes de cellules de mémoire analogiques (14) entre elles, en particulier cependant que le transfert peut être commandé de manière sélective pour chacune de ces lignes (13) de cellules de mémoire (14) ou peut être commandé spécialement pour une quantité partielle véritable de lignes (13) de cellules de mémoire (14) et
• entre au moins l'une des lignes (13) de cellules de mémoire analogiques (14) et la structure de lecture (12), en particulier par le signal de lecture (21) pour la lecture du code de position (9) détecté au moment de la détection,
cependant qu'au moins une seconde détection peut être effectuée entre une première détection et l'achèvement d'une première lecture correspondante de la première détection, seconde détection dont les charges (7) sont mémorisées temporairement de manière analogique dans la structure de mémorisation (11) et qui peut être lue à un moment plus tardif dans une seconde lecture au moins qui suit la première.

6. Indicateur de position selon l'une des revendications 1 à 5, cependant que l'élément détecteur présente une structure de dérivation (83, 42) qui est configurée telle que des charges (7) qui existent tout au plus dans une des cellules de mémoire analogiques (14) avant qu'un transfert de charge dans ces cellules de mémoire (14) ait lieu, en particulier cependant que la structure de dérivation (83, 42) peut être appliquée de manière sélective à une quantité partielle du nombre N des lignes de la structure de mémorisation analogique (11), en particulier à des lignes individuelles (13) de la structure de mémorisation (11).

7. Indicateur de position selon l'une des revendications 1 à 6, cependant que la structure de mémorisation (11) présente une gestion de mémoire qui commande le transfert de charge à l'aide du signal de déclenchement (20) et du signal de lecture (21) et qui est configurée telle
• qu'à l'aide du signal de lecture (21) un transfert des charges est effectué dans la structure de mémorisation (11) en direction de la structure de lecture (12) et la sortie du signal de données (22) à l'aide des valeurs analogiques mémorisées dans la structure de lecture (12) et
• qu'à l'aide du signal de déclenchement (20) un transfert des charges peut être effectué des zones de détection (16) dans la structure de mémorisation (11), en particulier dans l'une des lignes (13) de la structure de mémorisation (11) qui est la plus proche de la structure de lecture (12) dans laquelle aucune charge (7) n'est déjà mémorisée, en particulier cependant que la sortie se fait asynchrone par rapport au déclenchement.

8. Indicateur de position selon l'une des revendications 1 à 7, cependant que l'élément détecteur est monté avec une CCD avec structure CMOS sur un substrat semiconducteur commun, en particulier cependant que la structure de mémorisation (11) est réalisée en technologie CCD et la structure de lecture (12) en technologie CMOS et/ou l'élément détecteur est réalisé avec une structure à double échantillonnage corrélé (8), en particulier dans la ligne de la structure de mémorisation (11) à partir de laquelle le transfert dans la structure de lecture (12) est effectué.

9. Indicateur de position selon l'une des revendications 1 à 8, cependant que la ligne de zones de détection (16) présente au moins un pixel sombre (89) qui est protégé des photons incidents (p) et dans lequel il n'est pas généré de charge (7) par des photons et dont les charges sont transférées comme référence de sombre lors du transfert par lignes.

10. Procédé pour la détection optique d'au moins une partie d'un code de position (9) par une ligne d'éléments de détection photosensibles (16) avec
• une détection et une transformation de photons en charges électriques (7) dans les éléments de détection (16),
• une sortie d'un signal de données électrique (22) correspondant aux charges électriques qui est déclenchée par un signal de lecture (21),
• un déclenchement d'un moment de détection optique par un signal de déclenchement extérieur (20) et un transfert des charges électriques (7) ainsi déclenché à partir des éléments de détection (16) dans une structure de mémorisation (11) avec N > 1 lignes (13) de cellules analogiques de mémoire (14), cependant que le nombre de lignes (13) dans la structure de mémorisation (11) est plus grand que celui des éléments de détection (16), en particulier est un multiple de celui-ci et
• une mémorisation intermédiaire temporaire des charges analogiques (7) dans cette structure de mémorisation (11) avant la sortie,
cependant que la détection peut être effectuée par la mémorisation intermédiaire de manière asynchrone par rapport à la sortie.

11. Procédé selon la revendication 10, cependant que, lors de la mémorisation intermédiaire temporaire, le transfert dans la structure de mémorisation (11) est effectué de manière sélective à des lignes individuelles (13) ou à un sous-ensemble de lignes (13) de la structure de mémorisation (11), en particulier cependant qu'une partie supérieure des lignes (13) de la structure de mémorisation (11) est déplaçable indépendamment d'une partie inférieure des lignes (13) de la structure de mémorisation (11).

12. Procédé selon la revendication 10 ou 11, cependant qu'à l'aide de la structure de commutation (15)
• conditionné par un signal de déclenchement (15)
• un transfert de charges (7) est effectué de la ligne (10) de zones de détection photosensibles (16) dans une des lignes de la structure de mémorisation analogique (11),
• conditionné par un signal de lecture (21)
• un transfert de charges (7) est effectué d'une des lignes (13) de la structure de mémorisation analogique (11) dans une structure de lecture (12), en particulier avec un avancement d'au moins des lignes (13) de la structure de mémorisation (11) dans lesquelles des charges détectées (7) ont été mémorisées temporairement, et
• la sortie du signal de données électrique (22) de la structure de lecture (12) est effectuée,
en particulier cependant que le signal de lecture (21) peut être commandé dans le temps indépendamment du signal de déclenchement (20).

13. Procédé selon l'une des revendications 10 à 12, cependant que la structure de mémorisation (11) est gérée comme un registre à décalage ligne par ligne, en particulier selon un principe premier entré premier sorti, en particulier cependant qu'un effacement sélectif d'une quantité partielle des lignes (13) de la structure de mémorisation (11) peut être effectué, en particulier cependant que l'effacement sélectif d'une des lignes (13) a lieu avant le transfert de charges (7) dans cette ligne (13) et/ou cependant que
• en fonction du signal de déclenchement (20) les charges (7) des zones de détection (16) sont dérivées soit dans une structure de dérivation (83, 42), soit
• sont mémorisées dans la structure de mémorisation analogique (11),
en particulier cependant que les charges (7) dans la structure de mémorisation (11) sont transférées dans la ligne non occupée (131) qui se situe la plus proche de la structure de lecture (12).

14. Procédé selon l'une des revendications 10 à 13, cependant qu'il y a déclenchement par le signal de déclenchement (20)
• d'un transfert de charges parasitaires (7) qui se sont accumulées auparavant des zones de détection (16) à une première ligne (13) de la structure de mémorisation (11) qui est utilisée comme une ligne de corbeille sans information de code (tr0, tr1, tr2, tr3), suivi
• d'une détection de photons (7) pour déterminer le code de position (9) et
• d'un transfert des charges détectées des zones de détection (16) à une seconde ligne (13) de la structure de mémorisation (11) qui est utilisée comme une ligne de mesure (m0, m1, m2, m3) avec une information de code, en particulier cependant que les charges (7) de la ligne de corbeille (tr0, tr1, tr2, tr3) sont transférées pour la dérivation dans une structure de dérivation (83, 42) et celles-là des lignes de mesure (m0, m1, m2, m3) pour la sortie dans la structure de lecture (12).

15. Produit de programme d'ordinateur avec code de programme qui est mémorisé sur un support qui peut être lu par une machine, réalisé en tant que logique à câblage fixe ou en tant que signal de données d'ordinateur, matérialisé par une onde électromagnétique, pour la réalisation du procédé selon l'une des revendications 10 à 14, en particulier cependant que le code de programme exécute une commande d'un transfert de charge dans un indicateur de position (1) selon l'une des revendications 1 à 9, de préférence lorsque le code de programme est réalisé dans une unité d'analyse (4) d'un indicateur de position (1) selon l'une des revendications 1 à 9 et/ou dans un circuit d'analyse qui lui est lié.
